# EUROPEAN PATENT SPECIFICATION

(11) **EP 4 255 852 B1**
(45) Date of publication and mention of the grant of the patent: **09.09.2026**
(21) Application number: 21848293.3
(22) Date of filing: 06.12.2021
(51) Int. Cl.: C02F 1/00, B01D 27/10, B01D 27/14, C02F 9/00, C02F 1/28, C02F 1/42, C02F 1/44

(54) **A WATER TREATMENT CARTRIDGE FOR A WATER TREATMENT DEVICE, A HEAD OF A WATER TREATMENT DEVICE AND A WATER TREATMENT DEVICE COMPRISING SUCH A CARTRIDGE AND SUCH A HEAD**
EIN WASSERAUFBEREITUNGSKARTUSCHE FÜR EINE WASSERAUFBEREITUNGSVORRICHTUNG, EIN KOPF EINER WASSERAUFBEREITUNGSVORRICHTUNG UND EINE WASSERAUFBEREITUNGSVORRICHTUNG, DIE EIN SOLCHE KARTUSCHE UND EINEN SOLCHEN KOPF UMFASST
UNE CARTOUCHE DE TRAITEMENT D'EAU POUR UN DISPOSITIF DE TRAITEMENT D'EAU, UNE TÊTE D'UN DISPOSITIF DE TRAITEMENT D'EAU ET UN DISPOSITIF DE TRAITEMENT D'EAU COMPRENANT UNE TELLE CARTOUCHE ET UNE TELLE TÊTE

(30) Priority: 07.12.2020 PL 43625820
(43) Date of publication of application: 11.10.2023
(73) Proprietor: Formaster S.A., 25-818 Kielce (PL)
(72) Inventor: BURSZTEIN, Maciej, 25-714 Kilece (PL)
(74) Representative: AOMB Polska Sp. z.o.o.
(86) International application number: PCT/IB2021/061354
(87) International publication number: WO 2022/123422

(56) References cited:
- US-A- 5 744 030
- US-A1- 2005 161 394
- US-A1- 2020 199 001

## Description

### FIELD OF THE INVENTION

The present invention is related in general to water treatment, in particular domestic treatment of tap water. More specifically, the present invention is related to a water-treatment cartridge for a water-treatment device. Furthermore, the present invention is related to a head of the water-treatment device. The present invention is related also to a water-treatment device comprising such a cartridge and such a head.

### BACKGROUND OF THE INVENTION

There are known water-treatment devices, especially for tap water, comprising a head with a water-treatment cartridge arranged therein, see for example the document US2020199001 A1. Such a water-treatment cartridge is also referred to as a water-treatment insert. A water-treatment cartridge of such solutions typically constitutes an exchangeable water-treatment cartridge. The exchangeable water-treatment cartridge usually constitutes a filtering cartridge. In such a case, the exchangeable water-treatment cartridge comprises an activated carbon bed on which water filtration and absorption of undesirable chemical compounds present in the water to be treated, especially in raw tap water, takes place. The water-treatment cartridge may also constitute a cartridge for adjusting water hardness, a cartridge for adjusting water pH, a cartridge for enriching water with a desired substance, for example, desired ions, such as calcium, magnesium ions, and a cartridge for biological treatment. In such a case, the exchangeable water-treatment cartridge comprises a bed for adjusting water hardness, a bed for adjusting water pH, a bed for enriching water with a desired substance, and a bed for biological treatment, respectively In some available domestic water-treatment devices, the water-treatment cartridge constitutes an exchangeable zonal water-treatment cartridge. Such a zonal water-treatment cartridge usually comprises two zones, typically comprising different water-treatment beds, wherein in the first zone, first water treatment on the first bed takes place, and in the second zone, second water treatment on the second bed takes place. Most frequently, such a zonal water-treatment cartridge comprises a cartridge which filters and softens tap water and changes its pH. The water-treatment cartridge wears out with time. That is, the filtering cartridge gets clogged, the cartridge for adjusting water pH loses its pH adjustment properties, the cartridge for enriching water wears out and no longer introduces the desired substances into water, and the cartridge for biological treatment no longer improves the biological purity of the water treated. If this is the case, the water-treatment cartridge needs replacing.

In the known domestic devices for tap water treatment, the exchangeable water-treatment cartridge is mounted in the head of a water-treatment device by means of methods that are simple and untroublesome for the user. Most frequently, the exchangeable water-treatment cartridge is click-fitted in the head of a water-treatment device. In such solutions, the exchangeable cartridge typically comprises a protrusion, which engages a latch system contained in the head of a water treatment device. The latch system in the head is connected to a button which, when pressed, releases the exchangeable water-treatment cartridge from the head of a water-treatment device. Following removing the previous, usually worn water-treatment cartridge, typically a new water-treatment cartridge is placed in the head. When mounted, the water-treatment cartridge is placed in the head by pressing it until a characteristic "click" sound is heard, said sound being produced as the latch system of the head of a water-treatment device latches on the protrusion of the water-treatment cartridge. After the "click" sound is heard, which means that the water-treatment cartridge has been fitted in the head of the water-treatment device, the device is substantially ready for use.

Although the click-fitting of the water-treatment cartridge in the head of a water-treatment device, as described above for devices known from prior art, is simple and untroublesome for the user, it does pose certain problems. One of them is that there is a play between the water-treatment cartridge and the head of a water-treatment device, which may result in imprecise fitting of the water-treatment cartridge in the head of a water-treatment device. Imprecise fitting of an exchangeable water-treatment cartridge in the head of a water-treatment device may result in an imprecise flow connection between the water-treatment cartridge and the head of a water-treatment device and, consequently, to a disruption of the flow of water to be treated into the water-treatment cartridge and/or a disruption of the flow of treated water from the water-treatment cartridge into the head of the water-treatment device and further outside said water-treatment device. Another problem is that while using a water-treatment device, the water-treatment cartridge may get jammed in the water-treatment head, thus hampering removal of the water-treatment cartridge from the head of the water-treatment device. Jamming of the cartridge in the head may result, for example, but not limited to, by precipitation of sediment from water, especially from raw tap water of high hardness, within the limits of the connection between the water-treatment cartridge and the water-treatment head, causing the cartridge to get jammed in the head of a water-treatment device. Another factor which may hamper or even prevent removal of the water-treatment cartridge is the jamming of the rubber sealings, usually in the form of O-rings arranged on the neck of the water-treatment cartridge, providing sealing between the water-treatment cartridge and the head. The jamming of the rubber sealings results from the sticking of the water-treatment cartridge to the head of a water-treatment device, which head and cartridge are typically made of a plastic. The jamming of the water-treatment cartridge in the head of a water-treatment device is the greater the longer the water-treatment cartridge operates in the head of a water-treatment device and/or the greater the sealing tension the O-rings of the sealing are subjected to in the head. Therefore, when removing the water-treatment cartridge from the head of a water-treatment device, it is necessary to overcome the jamming by tearing the sealing off from at least the surface of the head of the water-treatment device. The foregoing problems are particularly burdensome when a water-treatment device is installed within a confined space, such as especially the space under a sink, wherein such water-treatment devices are typically installed.

Therefore, there is a demand for a water-treatment device, wherein a precise positioning of an exchangeable water-treatment cartridge in the head of the water-treatment device is provided, such device facilitating removal of such exchangeable water-treatment cartridge from the head of the water-treatment device, especially after the device has been used for an extended period of time and subjected to poor quality raw water to be treated, such device being simple and ensuring quick exchange of said exchangeable water-treatment cartridge in the water-treatment device.

### SUMMARY OF THE INVENTION

Therefore, in the first aspect of the present invention a water-treatment cartridge for a water-treatment device is provided, as specified in the independent claim 1.

The preferred embodiments of the water-treatment cartridges are specified in the dependent claims 2 to 4.

In another aspect of the present invention, a head for a water-treatment device is provided, as specified in the independent claim 5.

The preferred embodiment of the head is specified in the dependent claim 6.

In yet another aspect of the present invention, a water-treatment device is provided, as specified in the independent claim 7.

The preferred embodiments of the water-treatment device are specified in the dependent claims 8 to 11.

Therefore, the technical solutions according to the above-mentioned aspects of the present invention provide a water-treatment cartridge, a head of a water-treatment device and a water-treatment device comprising said head and said cartridge, wherein a simple design allowing easy and quick mounting of the water-treatment cartridge in the head of the water-treatment device while ensuring more precise positioning of said cartridge in said head of the water-treatment device is provided. Furthermore, the technical solution according to the above-mentioned aspects of the present invention allows easier removal of the water-treatment cartridge from the head of a water-treatment device, especially when the device is installed in a space with a limited access, such as, for example, a sink cabinet.

### DESCRIPTION OF THE DRAWINGS

The invention is now described in more detail with reference to the figures of the drawing, wherein:
Fig. 1 is a perspective top view of the water-treatment cartridge according to the invention;
Fig. 2 is a top view of the of the water-treatment cartridge of Fig. 1;
Fig. 3 is a side view of the of the water-treatment cartridge of Fig. 1;
Fig. 4 is a perspective bottom view of the head of a water-treatment device according to the invention;
Fig. 5 is a bottom view of the head of the water-treatment device of Fig. 4;

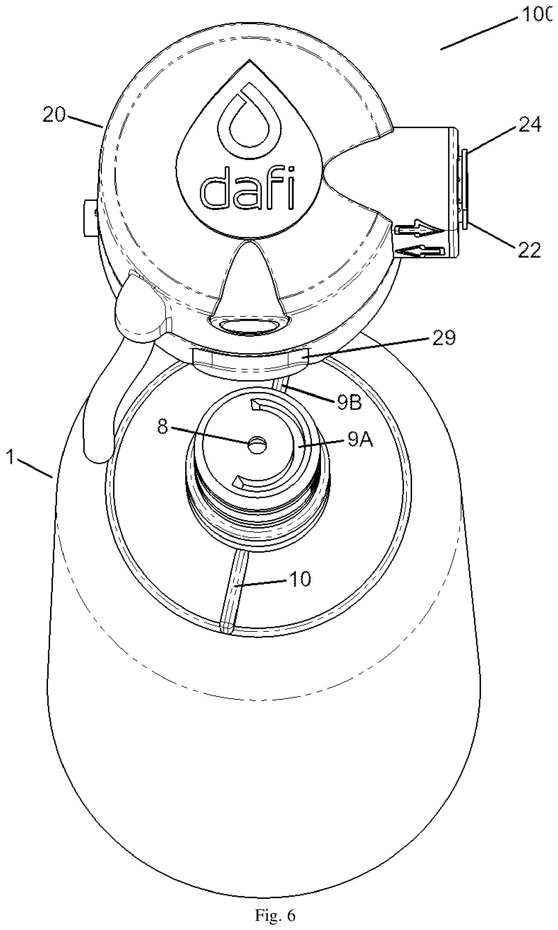

Fig. 6 is a perspective top view of the water-treatment device according to the invention, wherein the water-treatment cartridge is shown exploded away from the head of the water-treatment device;
Fig. 7 is a perspective exploded side view of the water-treatment device of Fig. 6;
Fig. 8 is a side view of the water-treatment device according to the invention, wherein the water-treatment cartridge is arranged in the head of the water-treatment device;
Fig. 9 is a cross-section of the water-treatment device of Fig. 8.

### DETAILED DESCRIPTION OF THE INVENTION

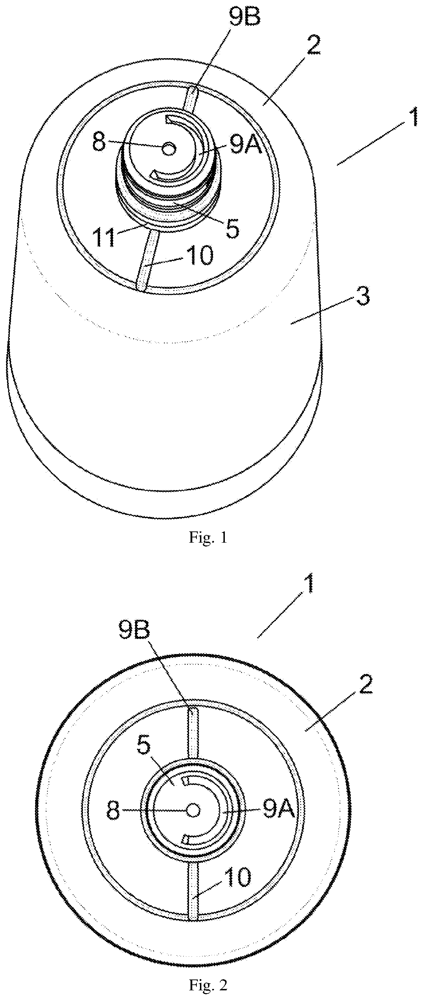

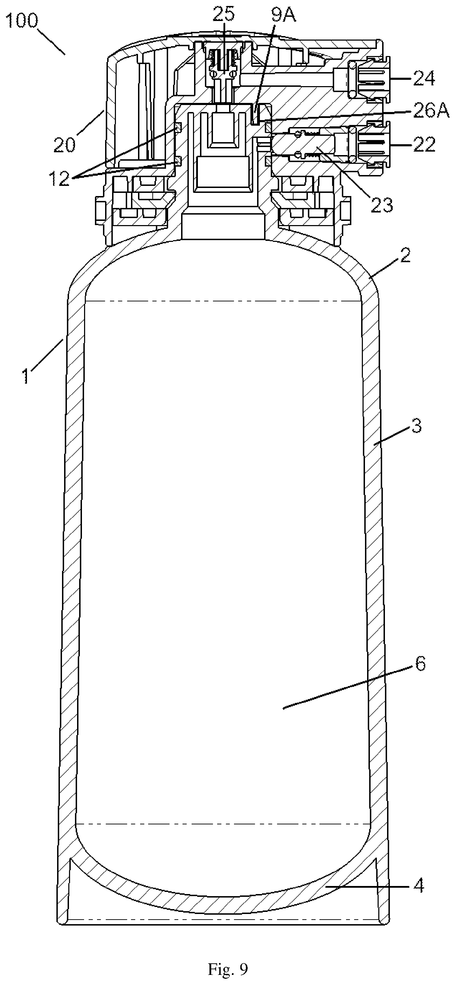

The present invention provides a water-treatment cartridge 1 for a water treatment device 100. As shown in Figs. 1 to 3, the water-treatment cartridge 1 comprises a body 2 comprising a cylindrical portion 3. At one of the ends, the cylindrical portion 3 of the body 2 is closed by means of a bottom 4. At the other end, the cylindrical portion 3 narrows down and transitions into a neck 5 of the body 2 of the water-treatment cartridge 1. The body 2, together with the cylindrical portion 3, the bottom 4 and the narrowing section of the cylindrical portion 3 ended with the neck 5 define an internal chamber 6 of the water-treatment cartridge 1, as shown in Fig. 9.

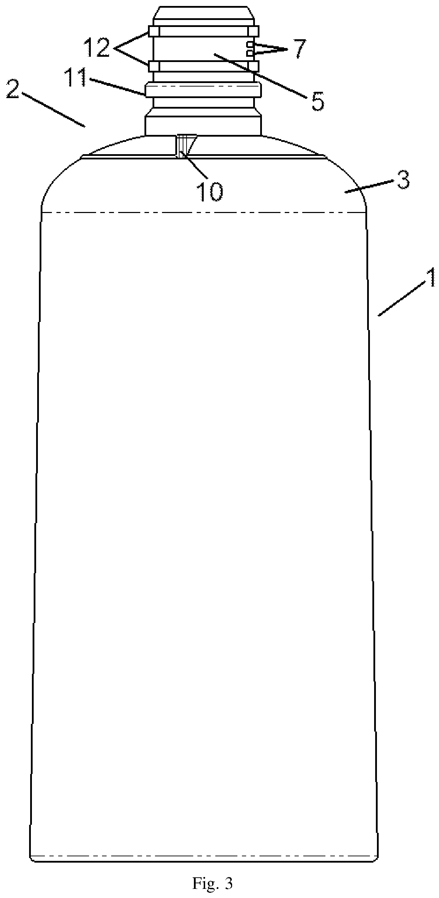

As shown in the figures, especially Fig. 2 and 3, the neck 5 is arranged in the central portion of the body 2 of the water-treatment cartridge 1. The neck 5 protrudes outside the body 2 of the water-treatment cartridge 1 and is substantially oriented along the longitudinal axis of said body 2, as shown in Fig. 3. As shown in Fig. 2, the neck 5 of the body 2 has a substantially circular cross-section. The neck 5 comprises at least one inlet channel 7 for supplying water for treatment to the water-treatment cartridge 1, and an outlet channel 8 for discharging water after treatment from the cartridge 1. As shown in Fig. 3, said at least one inlet channel 7 is arranged on the side wall of the neck 5 of the water-treatment cartridge 1. Moreover, said at least one inlet channel 7 extends directly to the water-treatment chamber 6 immediately downstream the neck 5 of the water-treatment cartridge 1. The outlet channel 8 is arranged on the face of the neck 5, that is, on the upper surface of the neck 5, looking at the water-treatment cartridge 1 from the top, and is arranged substantially along the longitudinal axis of the body 2 of the water-treatment cartridge 1, as shown in Fig. 2.

In the internal chamber 6 of the water-treatment cartridge 1, an outlet conduit is arranged (not shown in the figures) in a fluid communication with the outlet channel 8 for discharging water after treatment to the outlet channel 8 on the neck 5 of the water-treatment cartridge 1. The outlet conduit is arranged such that its free end is inside the internal chamber 6 near the bottom 4 of the body 2 of the water-treatment cartridge 1 to collect water after treatment from the bottom of the cartridge 1 and to transport said water to the outlet channel 8 on the neck 5 of said cartridge 1. In a preferred embodiment, the outlet conduit is arranged in the internal chamber 6 substantially along and within the longitudinal axis of the body 2 of the water-treatment cartridge 1 (not shown in the figures).

In one of the embodiments, the neck 5 of the body 2 of the water-treatment cartridge 1 comprises one inlet channel 7 for supplying water for treatment to the water-treatment cartridge 1. Said one inlet channel 7 is arranged on the side wall of the neck 5 of the water-treatment cartridge 1, as shown in Fig. 3. Moreover, the inlet channel 7 extends directly to the internal chamber 6 for the purposes of treating water, immediately downstream the neck 5 of the water-treatment cartridge 3. In this case, the water to be treated is supplied to the internal chamber 6 of the water-treatment cartridge 1 immediately downstream the inlet channel 7 and, after treatment, it is collected from said internal chamber 6 of the water-treatment cartridge 1 near the bottom 4 of the internal chamber of the water-treatment cartridge 1. Such design of the water-treatment cartridge 1 forces water to pass through the internal chamber 6 of the water-treatment cartridge 1 from the inlet channel 7 on the neck 5 of the cartridge 1 to the inlet of the outlet conduit near the bottom 4 of the cartridge 1 opposite said inlet channel 7 and further along the outlet conduit to the outlet channel 8 on the neck 5 of the water-treatment cartridge 1.

In another embodiment, the neck 5 of the body 2 of the water-treatment cartridge 1 comprises a first inlet channel and a second inlet channel (not shown in the figures) for supplying water for treatment to the zonal water-treatment cartridge 3. The first inlet channel and the second inlet channel are arranged on the side wall of the neck 5 of the water-treatment cartridge 1. Moreover, the first the inlet channel and the second inlet channel are arranged next to each other and in the same distance from the face of the neck 5, such that they are arranged parallel to the face of the neck (not shown in the figures). The first of the inlet channels extends directly to the internal chamber 6 for the purposes of treating water, immediately downstream the neck 5 of the water-treatment cartridge 3. The second of the inlet channels is connected to the inlet conduit (not shown in the figures). The inlet conduit extends inside the internal chamber 6 toward the bottom 4 of the body 2 of the cartridge. The end of the conduit is arranged at a specified distance from the second inlet channel, thus delimiting in the internal chamber 6 of the water-treatment cartridge 1 a first water-treatment zone and a second water-treatment zone. The size of the first water-treatment zone and of the second water-treatment zone can be adjusted depending on the needs by means of adjusting the length of the guide conduit between its free end in the internal chamber 6 of the body 2 of the water-treatment cartridge 1 and the corresponding inlet channel on the neck 5 of said cartridge 1. In such case, the water to be treated is supplied to the internal chamber 6 of the water-treatment cartridge 1 by the first inlet channel or the second inlet channel or by the first inlet channel and the second inlet channel simultaneously. The water to be treated can be supplied to the water-treatment cartridge 1 solely by the first inlet channel. In such case, the water has to pass through the internal chamber 6 of the cartridge 1 from the first inlet channel on the neck 5 of the cartridge 1 through the first water-treatment zone and subsequently through the second water-treatment zone and to the inlet of the outlet conduit near the bottom 4 of the cartridge 1 opposite said first inlet channel 7 and further along the outlet conduit to the outlet channel 8 on the neck 5 of the water-treatment cartridge 1. The water to be treated can be supplied to the water-treatment cartridge 1 solely by the second inlet channel. In such case, the water has to pass down the conduit extending from the second inlet channel on the neck 5 of the cartridge 1 immediately to the second water-treatment zone, pass through said second water-treatment zone, to the inlet of the outlet conduit at the bottom 4 of the water-treatment cartridge 1 opposite said second inlet channel on the neck 5 and further along the outlet conduit to the outlet channel 8 on the neck 5 of the water-treatment cartridge 1. In yet another case, part of the water to be treated is supplied to the first inlet channel and passes through the internal chamber 6 of the water-treatment cartridge 1 and passes through the first and the second water-treatment zone, as described above for the first inlet channel, while part of the water is supplied to the second inlet channel and passes only through the second water-treatment zone, as described above for the second inlet channel. The amount of water treated in each water-treatment zone in the water-treatment cartridge 1 can be adjusted by changing the ratio of the amount of water supplied for treatment through the first inlet channel and the second inlet channel. The guide conduit is arranged within the internal chamber 6 of the water-treatment cartridge 1 substantially along the longitudinal axis of the water-treatment cartridge. In one of the preferred embodiments, the guide conduit is arranged in the vicinity of the outlet conduit, where the guide conduit and the outlet conduit are arranged substantially within and along the longitudinal axis of the body 2 of the water-treatment cartridge 1. In another embodiment, the outlet conduit is arranged coaxially inside the guide conduit. In such case, the guide conduit surrounds the outlet conduit along its length and there is a space between these conduits, which is in a fluid communication with the second inlet channel for supplying water to be treated to the second water-treatment zone, as described above for the guide conduit. The outlet conduit arranged inside the guide conduit and within the longitudinal axis of said the outlet conduit, is in a fluid communication with the outlet channel 8, and discharges water after treatment from the bottom of the chamber 6 of the water-treatment cartridge 1 to the outlet channel 8 of said cartridge 1, as described above in relation to the outlet channel. In a preferred embodiment, the pipe-in-pipe assembly of the guide conduit and the outlet conduit is arranged in the internal chamber 6 substantially along and within the longitudinal axis of the body 2 of the water-treatment cartridge 1 (not shown in the figures).

The inlet channel/inlet channels 7 for supplying water to the water-treatment cartridge 1 and the outlet channel 8 for discharging water after treatment from the water-treatment cartridge 1 have a circular section. In other embodiments, at least the inlet channel/inlet channels 7 and the outlet channel 8 have, each independently, a cross-section selected from among a group including a circular, oval, triangular, square, rectangular, pentagonal, hexagonal or any polygonal cross-section. In yet another preferred embodiment, at least the inlet channel/inlet channels 7 and the outlet channel 8 comprise at least one divider which divides the inlet channels and the outlet channel 7, respectively, into at least two inlet or outlet sub-channels (not shown in the figures). In a preferred embodiment, both inlet channel 7 and the outlet channel 8 each comprise one divider dividing the inlet channel/inlet channels 7 and the outlet channel 8 into two inlet sub-channels and two outlet sub-channels, respectively (not shown in the figures). In yet another preferred embodiment, both the inlet channel/ inlet channels 7 and the outlet channel 8 each comprise two intersecting dividers dividing channels 7, 8, respectively, into four inlet sub-channels and four outlet sub-channels, respectively (not shown in the figures).

In the internal chamber 6 of the water-treatment cartridge 1 there is at least one bed (not shown in the figures) for at least one treatment of water in said water-treatment cartridge 1.

In one of the embodiments of the invention, in the internal chamber 6 of the water-treatment cartridge 1 there is one water-treatment bed (not shown in the figures). In this embodiment, the water-treatment bed takes up practically the entire volume of the internal chamber 6 of the water-treatment cartridge 1. Thus, the water-treatment cartridge 1 with one bed constitutes a single-function cartridge, that is, the water-treatment cartridge 1 constitutes, depending on the bed, but not limited to, a filtering cartridge, a water hardness adjustment cartridge, a water enrichment cartridge, a water pH adjustment cartridge or a biological treatment cartridge, respectively.

In another preferred embodiment of the invention, in the internal chamber 6 of the water-treatment cartridge 1 two water-treatment beds are arranged (not shown in the figures). In this embodiment, the beds are arranged in series in the direction of the flow of water through the water-treatment cartridge 1. In yet another embodiment of the invention, in the internal chamber 6 of the water-treatment cartridge 1 three water-treatment beds are arranged (not shown in the figures). In this embodiment, the third bed is arranged between the first and the second water-treatment bed.

In yet another embodiment of the invention, if necessary, the water-treatment cartridge 1 comprises four or more water-treatment beds. The water-treatment beds in the cartridge 1 with four or more beds are arranged analogously as in the case of the water-treatment cartridge 1 with tree beds, as described above.

As mentioned above, water treatment in the water-treatment cartridge 1 according to the present invention is performed in the beds. The water-treatment beds are selected, but not limited to, from among a filtering bed, a water hardness adjustment bed, a water-enrichment bed, a water pH adjustment bed, a biological water-treatment bed.

A water-treatment bed or, alternatively, water-treatment beds, in the configuration described above, can be arranged in the first and the second water-treatment zone, respectively, of the zonal water-treatment cartridge 1 described above. In one of the embodiments, in the first water-treatment zone there is arranged a first bed for first water-treatment, and in the second zone there is arranged a second water-treatment bed. The water treatment beds to be arranged in the first and the second water-treatment zone are selected, but not limited to, from those described above. In a preferred embodiment, the first bed for the first water treatment arranged in the first water-treatment zone constitutes a water hardness adjustment bed in a form of ion-exchange resin, and the second bed for the second water treatment arranged in the second water-treatment zone constitutes a filtering bed in a form of an activated carbon block. In such case, the water-treatment cartridge 1 constitutes a two-function zonal cartridge for adjusting water hardness and filtration. In another embodiment, one of the water-treatment beds is arranged in one of the water-treatment zones, while the other water-treatment bed is partly arranged in the same zone as the first water-treatment bed and simultaneously in the entire second water-treatment zone.

The number and type of the water-treatment beds to be placed in the water-treatment cartridge 1 is selected according to the needs. Based on the disclosure presented herein, a person skilled in the art would know how to select the number and type of the water-treatment beds and how to arrange such water-treatment bed/beds in the internal chamber 6 of the body 2 of the water-treatment cartridge 1 in order to attain previously set water-treatment objectives.

The water-treatment cartridge 1 comprises a first element 9A, 9B of the orienting-ejecting means of the water-treatment device 100. The first element 9A, 9B of the orienting-ejecting means is arranged on the body 2 of the water-treatment cartridge 1. The first element 9A, 9B of the orienting-ejecting means allows precise positioning the cartridge 1 for water treatment in the head 20 of the water-treatment device 100. The first element 9A, 9B of the orienting-ejecting means also allows ejecting the cartridge 1 for water treatment from the head 20 of the water-treatment device 100 during removing said cartridge 1 from said head 20 of the water-treatment device 100.

According to the invention, the first element 9A of the orienting-ejecting means on the water-treatment cartridge 1 is arranged on the neck 5 of the water-treatment cartridge 1. In a preferred embodiment, the first element 9A of the orienting-ejecting means on the water-treatment cartridge 1 constitutes a groove arranged on the face of the neck 5 of the water-treatment cartridge 1, as shown in Figs. 1 and 2. In a more preferred embodiment, the grove constituting the first element 9A of the orienting-ejecting means on the water-treatment cartridge 1 is arranged on the face of the neck 5, looking from the top from the side of the neck 5, on a circular segment along the edge of the neck 5 of the water-treatment cartridge, as shown in Fig. 2. In this embodiment, due to the fact that the first element 9A of the orienting-ejecting means is arranged on the face of the neck 5 and on a circular segment along the edge of said neck 5, the positioning of the water-treatment cartridge 1 in the head 20 is particularly precise due to the accuracy of positioning of the neck 5 of the cartridge 1 in the seat 21 of the head of the water-treatment device 100, as it is described in more detail below. Moreover, in such case, the accuracy of positioning the neck 5 of the cartridge 1 in the seat 21 of the head 20 of the water-treatment device is also maintained in the case of the zonal water-treatment cartridge 1 during properly adjusting said cartridge 1 in the seat 21 of said head 20 by rotating it around its longitudinal axis. Another particular advantage of such embodiment is that ejection of the cartridge 1 from the head 20 of the water-treatment device 100 during removing said cartridge 1 from said head 20 of the water-treatment device 100 is generated in cooperation with the groove on the face of the neck 5 of the water-treatment cartridge at the bottom of the seat 21 of the head 20 of the water-treatment device 100. Preferably, the groove constituting the first element 9A of the orienting-ejecting means on the water-treatment cartridge 1 is arranged on a portion constituting from approximately 10% to approximately 80% of the circumference of the neck 5 of the water-treatment cartridge, preferably from approximately 30% to approximately 70% of the circumference of the neck 5, more preferably from approximately 40% to approximately 70% of the circumference of the neck 5 of the water-treatment cartridge, most preferably approximately 65%. In a preferred embodiment, the groove constituting the first element 9A of the orienting-ejecting means on the water-treatment cartridge 1 is arranged on a portion constituting approximately 10% of the circumference of the neck 5 of the water-treatment cartridge 1, preferably approximately 30% of the circumference of the neck, more preferably approximately 40% of the circumference of the neck and most preferably approximately 65%. It has been found that arranging the groove of the first element 9A of the orienting-ejecting means constituting approximately 65% of the circumference of the neck 5 of the water-treatment cartridge 1 is most favourable, as it is for this value that the best ejecting and orienting action of the first element 9A of the orienting-ejecting means on the water-treatment cartridge is observed. In an alternative, preferred embodiment, the first element 9A of the orienting-ejecting means on the water-treatment cartridge 1 constitutes a protrusion (not shown in the figures). In such case, the protrusion constituting the first element 9A of the orienting-ejecting means on the water-treatment cartridge 1 is configured and/or arranged analogously as described above for the grove, especially in preferred embodiments of the grove constituting the first element 9A of the orienting-ejecting means of the water-treatment device 100.

Present disclosure, not according to the invention, shows that the first element 9B of the orienting-ejecting means on the water-treatment cartridge 1 is arranged on the body 2 of the water-treatment cartridge 1 near the base of the neck 5, as shown in Figs. 1 to 3. In a beneficial variant, not according to the invention, the first element 9B of the orienting-ejecting means on the water-treatment cartridge 1 is arranged on the body 2 of the water-treatment cartridge 1 near the base of the neck 5. In a more beneficial variant, not according to the invention, the protrusion of the constituting the first element 9B of the orienting-ejecting means is arranged radially on the body 2 of the water-treatment cartridge 1 near the base of the neck 5, as shown in Figs. 1 to 3. In this variant, due to the fact that the first element 9B of the orienting-ejecting means is arranged on the body 2 of the water-treatment cartridge 1 near the base of the neck 5 radially from said neck 5, the positioning of the water-treatment cartridge 1 in the head 20 is particularly precise due to the accuracy of positioning of the body 2 of the cartridge 1 in the head 20 of the water-treatment device 100, as it is described in more detail below. Moreover, in such case, the accuracy of positioning the cartridge 1 in the head 20 of the water-treatment device 100 is also maintained in the case of the zonal water-treatment cartridge 1 during properly adjusting said cartridge 1 in the seat 21 of said head 20 by rotating it around its longitudinal axis. Another particular advantage of such variant, not according to the invention, is that the ejection of the water-treatment cartridge 1 from the head 20 of the water-treatment device 100 during removing said cartridge 1 from said head 20 of the water-treatment device 100 is generated in cooperation with the protrusion on the body 2 of the water-treatment cartridge 1 on the head 20 of the water-treatment device 100 near the seat 21 of said head 20. In an alternative, beneficial variant, not according to the invention, the first element 9B of the orienting-ejecting means on the water-treatment cartridge 1 constitutes a recess (not shown in the figures). In such case, the recess constituting the first element 9B of the orienting-ejecting means on the water-treatment cartridge 1 is configured and/or arranged analogously as described above for the protrusion, especially in beneficial variants, not according to the invention, of the protrusion constituting the first element 9B of the orienting-ejecting means of the water-treatment device 100.

The water-treatment cartridge 1 comprises a first element 10 of the positioning-adjusting means of the water-treatment device 100. The first element 10 of the positioning-adjusting means is arranged on the body 2 of the water-treatment cartridge 1. In a preferred embodiment, the first element 10 of the orienting-ejecting means is arranged on the body 2 of the water-treatment cartridge 1 near the base of the neck 5, as shown in Figs. 1 to 3. In yet more preferred embodiment, the first element 10 of the orienting-ejecting means on the water-treatment cartridge 1 constitutes a protrusion arranged on the body 2 of the water-treatment cartridge 1 near the base of the neck 5. In yet more preferred embodiment, the protrusion constituting the first element 10 of the orienting-ejecting means is arranged radially on the body 2 of the water-treatment cartridge 1 near the base of the neck 5, as shown in Figs. 1 to 3. In an alternative, preferred embodiment, the first element 10 of the positioning-adjusting means on the water-treatment cartridge 1 constitutes a recess (not shown in the figures). In such case, the recess constituting the first element 10 of the positioning-adjusting means on the water-treatment cartridge 1 is configured and/or arranged in analogously as described above for the protrusion, especially in preferred embodiments of the protrusion constituting the first element 10 of the positioning-adjusting means of the water-treatment device 100.

In one of the embodiments, wherein the water-treatment cartridge 1 comprises one inlet channel 7, as described in detail above, the first element 10 of the positioning-adjusting means on the water-treatment cartridge 1 constitutes a positioning element (not shown in the figures). The positioning element constituting the first element 10 of the positioning-adjusting means on the water-treatment cartridge 1 is arranged on the body 2, as described above, in such a spatial relationship relative to the inlet channel 7 that when the water-treatment cartridge 1 is mounted in the water-treatment device 100, said water-treatment cartridge 1 is arranged in the head 20 of the water-treatment device 100 in only one possible position relative to said head 20 of the water-treatment device 100, wherein a flow communication is formed with the inlet channel 7 of said water-treatment cartridge 1.

In one of the embodiments, wherein the water-treatment cartridge 1 comprises two inlet channels, as described in detail above for the zonal water-treatment, the first element 10 of the positioning-adjusting means on the water-treatment cartridge 1 constitutes an adjusting element, as shown in Figs. 1 to 3. The adjusting element constituting the first element 10 of the positioning-adjusting means on the water-treatment cartridge 1 is arranged on the body 2, as described above, in such a spatial relationship relative to the first inlet channel and the second inlet channel that allows placing in the head 20 of the water-treatment device 100 and adjusting specifically said water-treatment cartridge 1 relative to said head 20 of the water-treatment device 100 substantially by rotating said water-treatment cartridge 1 relative to the head 20 of the water-treatment device 100 around the longitudinal axis of said cartridge 1.

In yet another preferred embodiment, in addition to the positioning and/or adjusting functions, as described above, the first element 10 of the positioning-adjusting means on the water-treatment cartridge 1 also performs the function of the first element 9B of the orienting-ejecting means. In other words, the first element 10 of the positioning-adjusting means on the water-treatment cartridge 1 is shaped such that it allows orienting the water-treatment cartridge 1 in the head 20 of the water-treatment device 100 during installation of said cartridge 1 and/or allows ejecting the water-treatment cartridge 1 from the head 20 of the water-treatment device 100, as described in detail above with regard to the first element 9B of the orienting-ejecting means.

The body 2 of the water-treatment cartridge 1 comprises a first element 11 of the mounting means of the water-treatment device 100 for mounting the water-treatment cartridge 1 in the head 20 of the water-treatment device 100. The first element 11 of the water-treatment mounting means of the water-treatment cartridge 1 allows mounting the water-treatment cartridge 1 in the head 20 of the water-treatment device 100 such that said cartridge 1 is substantially immovable relative to the head 20 along the longitudinal axis of the water-treatment cartridge 1 but is rotatable relative to said head 20 around the longitudinal axis of the water-treatment cartridge 3. In a preferred embodiment, the first element 11 of the mounting means on the water-treatment cartridge 1 constitutes a protrusion extending on at least a portion of the lateral surface of the neck 5 of the body 2 of the water-treatment cartridge 1. In a more preferred embodiment, the first element 11 of the mounting means of the water-treatment cartridge 1 constitutes a protrusion in the form of a ring extending around the neck 5 of the body 2 of the water-treatment cartridge 1, as shown in Fig. 3. In yet more preferred embodiment, the protrusion constituting the first element 11 of the mounting means of the water-treatment cartridge 1 extends around the neck 5 of the body of the water-treatment cartridge 1 and is arranged near the base said neck 5, as shown in Fig. 3. In an alternative, preferred embodiment, the first element 11 of the mounting means on the water-treatment cartridge 1 constitutes a groove (not shown in the figures). In such case, the groove constituting the first element 11 of the mounting means on the water-treatment cartridge 1 is configured and/or arranged analogously as described above in relation to the protrusion, especially in preferred embodiments of the protrusion constituting the first element 11 of the mounting means of the water-treatment device 100.

The body 2 of the water-treatment cartridge 1 comprises sealing means 12 for sealing the engagement between the water-treatment cartridge 1 and the head 20 of the water-treatment device 100, following its mounting in said device 100. In a preferred embodiment, the sealing means 12 constitute sealing rings arranged on the neck 5 of the body 2 of the water-treatment cartridge 1. In another preferred embodiment, the sealing means 12 constitute two sealing rings on the neck 5 of the body 2 of the water-treatment cartridge 1, where one of them is arranged on one side relative to the inlet channel/inlet channels 7 for supplying water to the water-treatment cartridge 1, while the other one is arranged on the opposite side of said inlet channel/inlet channels 7 for supplying water to the water-treatment cartridge 1, as shown in Fig. 2.

The water-treatment cartridge 1 according to the invention is an exchangeable cartridge. In a preferred embodiment, the water-treatment cartridge 1 is a disposable cartridge, which is removed from the water-treatment device 100 and thrown away or disposed and replaced with a new water-treatment cartridge 1. In another preferred embodiment, the water-treatment cartridge 1 is a multiple-use cartridge, which is removed from the water-treatment device 100 and regenerated for further use in the water-treatment device 100.

The present invention also provides a head 20 of the water-treatment device 100, in which head 20 the water-treatment cartridge 1 according to the present invention is placeable. The head 20 according to the invention comprises a seat 21 in which the neck 5 of the water-treatment cartridge 1 is placeable. The seat 21 of the head 20 of the water-treatment device 100 constitutes a recess having a substantially circular cross-section, whose shape corresponds to the shape of the neck 5 of the water-treatment cartridge 1, as shown in Fig. 9.

The head 20 of the water-treatment device 100 comprises a port 22 for supplying water for treatment to the water-treatment cartridge 1. The port 22 of the head 20 of the water-treatment device is on one side connected to the water-supply network for supplying tap water for treatment to the head 20 of the water-treatment device 100. The port 22 for supplying water for treatment is arranged on the side wall of the seat 21 of the head 21 and forms, at the other end, a fluid communication respectively with at least one inlet channel 7 of the water-treatment cartridge 1, when installed in the water-treatment device 100. In a preferred embodiment, the port 22 for supplying water for treatment comprises termination means 23 for terminating the flow of water from the water-supply network, when the water-treatment cartridge 1 is removed from the head 20 of the water-treatment device 100. In a preferred embodiment, the termination means 23 of the port 22 of the head 20 of the water-treatment device for terminating the flow of water for treatment is a check valve. In a preferred embodiment of the water-treatment cartridge 1 comprising at least one divider arranged in the inlet channel/inlet channels 7, as described above, such at least one divider cooperates, when the water-treatment cartridge 1 is installed in the head 20 of the water-treatment device 100, with the termination means 23 of the port 22 of the head 20, such that these termination means 23 are fully open, thus improving the flow of water for treatment into the water-treatment cartridge 1.

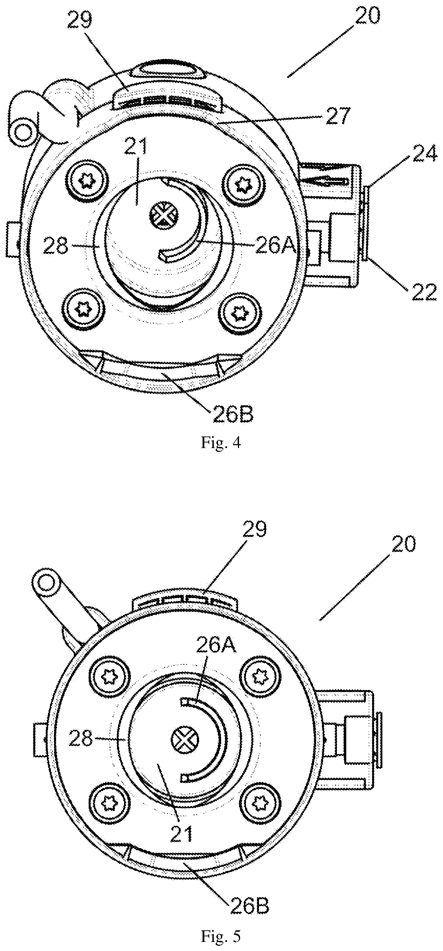

The head 20 of the water-treatment device 100 comprises a port 24 for discharging water after treatment from the water-treatment cartridge 1. The port 24 of the head 20 of the water-treatment device 100 is on one side connected to the system for discharging water after treatment from the head 20 of the device 100 for the purpose of using the water. Preferably, the collection system is a domestic water-supply network or a port for intaking water after treatment. The port 24 for discharging water after treatment is arranged at the other end, at the bottom of the seat 21, as shown in Figs. 4 and 5, and forms a fluid communication with the outlet channel 8 for discharging water from the water-treatment cartridge 1, when the water-treatment cartridge 1 is installed, as shown in Fig. 9. In a preferred embodiment, the port 24 for discharging water after treatment comprises terminating means 25 for terminating backflow of water from the hydraulic system downstream the head 20 of the water-treatment device 100, after the water-treatment cartridge 1 has been removed from the head 20 of said device 100. In a preferred embodiment, the termination means 25 of the port 24 of the head 20 of the water-treatment device 100 for terminating backflow of water from the hydraulic system constitutes a check valve. In a preferred embodiment of the water-treatment cartridge 1 comprising at least one divider arranged in the outlet channel 8, as described above, such at least one divider cooperates, when the water-treatment cartridge 1 is installed in the head 20 of the water-treatment device 100, with the terminating means 25 of the port 24, such that these terminating means 25 are fully open, thus improving the discharge of water after treatment from the water-treatment cartridge 1.

The head 20 of the water-treatment device 100 comprises a second element 26A, 26B of the orientating-ejecting means of the water-treatment device 100. The second element 26A, 26B of the orienting-ejecting means in the head 20 of the water-treatment device 100 corresponds in terms of shape and orientation with the first element 9A, 9B of the orienting-ejecting means on the water-treatment cartridge 1.

According to the invention, the second element 26A of the orienting-ejecting means is arranged in the seat 21 of the head 20 of the water-treatment device 100. The second element 26A of the orienting-ejecting means in the seat 21 of the head 20 of the water-treatment device is arranged at the bottom of the seat 21 on a circular segment along the side wall of the seat 21 of the head 20 of the water-treatment device 100. In an embodiment, if the first element 9A of the orienting-ejecting means constitutes a groove arranged on the face of the neck 5 of the water-treatment cartridge 1, the second element 26A of the orienting-ejecting means constitutes a protrusion arranged complementary at the bottom of the seat 21 of the head of the water-treatment device 100. an embodiment, according to the invention, wherein the groove constituting the first element 9A of the orientating-ejecting means on the water-treatment cartridge 1 is arranged on the face of the neck 5, looking from the top from the side of the neck 5, on a circular segment along a part of the edge of the neck 5 of the water-treatment cartridge 1, as shown in Fig. 2, the protrusion constituting the second element 26A of the orienting-ejecting means, looking at the bottom of the seat 21 of the head 20 of the water-treatment device 100, is arranged at the bottom of said seat 21 on a circular segment along the side wall 21 of the head 20 of the water-treatment device, as shown in Fig. 5.

Present disclosure, not according to the invention, shows that the second element 26B of the orienting-ejecting means is arranged near the seat 21 of the head 20 of the water-treatment device 100. In a beneficial variant, not according to the invention, the second element 26B of the orienting-ejecting means near the seat 21 of the head 20 of the water-treatment device is arranged on the front plane of the head 20 of the water-treatment device 100, as shown in Figs. 4 and 5. In a beneficial variant, not according to the invention, if the first element 9B of the orienting-ejecting means constitutes a protrusion arranged at the base of the neck 5 of the water-treatment cartridge 1, the second element 26B of the orienting-ejecting means constitutes a recess arranged complementary at the seat 21 of the head 20 of the water-treatment device 100. In a more beneficial variant, not according to the invention, wherein the protrusion constituting the first element 9B of the orienting-ejecting means on the water-treatment cartridge 1 is arranged radially on the body 2 of the water-treatment cartridge 1 near the base of the neck 5, looking down from the side of the neck 5, as shown in Fig. 2, the recess constituting the second element 26B of the orienting-ejecting means, looking toward the seat 21 of the head 20 of the water-treatment device 100, is arranged on the head 20 of the water-treatment device 100, far from the seat 21 and along the edge of the head 20 of the water-treatment device 100, as shown in Fig. 5.

In the embodiment, wherein the first element 10 of the positioning-adjusting means on the water-treatment cartridge 1 constitutes a positioning element, as described above, the second element 26A, 26B of the positioning-adjusting means in the head 20 of the water-treatment device 100 has such a size, that a small rotation of the water-treatment cartridge 1 around its longitudinal axis during removing said water-treatment cartridge 1 from the water-treatment device 100 results in said cartridge 1 being ejected from said head 20. In a preferred embodiment, according to the invention, the protrusion constituting the second element 26A of the orienting-ejecting means in the seat 21 of the head 20 of the water-treatment device 100 has such a length relative to the groove constituting the first element 9A of the orienting-ejecting means on the water-treatment cartridge 1 that water-treatment cartridge 1 is ejected from the head 20 of the water-treatment device on rotating said cartridge 1 around its longitudinal axis in any direction by approximately 5° to approximately 19°, more preferably by approximately 8° to approximately 16°, and even more preferably by approximately 13°. In another preferred embodiment, the protrusion constituting the second element 26A of the orienting-ejecting means in the seat 21 of the head 20 of the water-treatment device 100 has such a length relative to the groove constituting the first element 9A of the orienting-ejecting means on the water-treatment cartridge 1 that water-treatment cartridge 1 is ejected from the head 20 of the water-treatment device on rotating said cartridge 1 around its longitudinal axis in any direction by approximately 5°, more preferably by approximately 8°, and even more preferably by approximately 13°. In yet another preferred embodiment, the protrusion constituting the second element 26A of the orienting-ejecting means in the seat 21 of the head 20 of the water-treatment device has smaller length relative to the groove constituting the first element 9A of the orienting-ejecting means on the water-treatment cartridge 1, where the length of the second element 26A of the orienting-ejecting means is smaller than that of the first element 9A of the orienting-ejecting means and is in a range from 0.1 mm to 5.5 mm, preferably from 0.1 mm to 3.0 mm, more preferably from 0.1 mm to 0.2 mm. In a beneficial variant, not according to the invention, the recess constituting the second element 26B of the orienting-ejecting means by the edge of the head 20 of the water-treatment device 100, on the side of the seat 21, has such a length relative to the protrusion constituting the first element 9B of the orienting-ejecting means on the body 2 of the water-treatment cartridge 1 that the water-treatment cartridge 1 is ejected from the head 20 of the water-treatment device on rotating said cartridge 1 around its longitudinal axis in any direction by approximately 5° to approximately 19°, more preferably by approximately 8° to approximately 16°, and even more preferably by approximately 13°. In another beneficial variant, not according to the invention, the recess constituting the second element 26B of the orienting-ejecting means by the edge of the head 20 of the water-treatment device 100, on the side of the seat 21, as shown in Fig. 5, has such a length relative to the protrusion constituting the first element 9B of the orienting-ejecting means on the body 2 of the water-treatment cartridge 1 that the water-treatment cartridge 1 is ejected from the head 20 of the water-treatment device on rotating said cartridge 1 around its longitudinal axis in any direction by approximately 5°, more preferably by approximately 8°, and even more preferably by approximately 13°. In yet another beneficial variant, not according to the invention, the recess constituting the second element 26B of the orienting-ejecting means by the edge of the head 20 of the water-treatment device 100, on the side of the seat 21, has a greater length relative to the protrusion constituting the first element 9B of the orienting-ejecting means on the water-treatment cartridge 1, where the length of the second element 26B of the orienting-ejecting means is greater than that of the first element 9B of the orienting-ejecting means and is in a range from 0.1 mm to 5.0 mm, preferably from 0.1 mm to 3.0 mm, more preferably from 0.1 mm to 0.2 mm.

In the embodiment, wherein the first element 10 of the positioning-adjusting means on the water-treatment cartridge 1 constitutes the adjusting element, as described above, the second element 26A, 26B of the positioning-adjusting means in the head 20 of the water-treatment device 100 has such a size that it is possible to adjust the flow of water for treatment through the first water-treatment zone and/or the second water-treatment zone, respectively, of the water-treatment cartridge 1 by rotating said cartridge 1 around its longitudinal axis in one direction or the other direction, respectively, while a further, slight rotation of the water-treatment cartridge 1 around its longitudinal axis beyond the extreme adjustment settings during removing said water-treatment cartridge 1 from the water-treatment device 100 results in said cartridge 1 being ejected from said head 20. In a preferred embodiment, the protrusion constituting the second element 26A of the orienting-ejecting means in the seat 21 of the head 20 of the water-treatment device 100 has such a length relative to the groove constituting the first element 9A of the orienting-ejecting means on the water-treatment cartridge 1 that the water-treatment cartridge 1 is ejected from the head 20 of the water-treatment device following rotating said cartridge 1 around its longitudinal axis in any direction by approximately 2° to approximately 19°, more preferably by approximately 5° to approximately 16°, and even more preferably by approximately 13°. In another preferred embodiment, the protrusion constituting the second element 26A of the orienting-ejecting means in the seat 21 of the head 20 of the water-treatment device 100 has such a length relative to the groove constituting the first element 9A of the orienting-ejecting means on the water-treatment cartridge 1 that water-treatment cartridge 1 is ejected from the head 20 of the water-treatment device on rotating said cartridge 1 around its longitudinal axis in any direction by approximately 2°, more preferably by approximately 5°, and most preferably by approximately 13°. In yet another preferred embodiment, the protrusion constituting the second element 26A of the orienting-ejecting means in the seat 21 of the head 20 of the water-treatment device 100 has smaller length relative to the groove constituting the first element 9A of the orienting-ejecting means on the water-treatment cartridge 1, where the length of the second element 26A of the orienting-ejecting means is smaller than that of the first element 9A of the orienting-ejecting means and is in a range from 6.1 mm to 11.1 mm, preferably from 6.1 mm to 9.1 mm, more preferably from 6.1 mm to 6.2 mm. In a beneficial variant, not according to the invention, the recess constituting the second element 26B of the orienting-ejecting means along the edge of the head 20 of the water-treatment device 100, on the side of the seat 21, has such a length relative to the protrusion constituting the first element 9B of the orienting-ejecting means on the water-treatment cartridge 1 that the water-treatment cartridge 1 is ejected from the head 20 of the water-treatment device on rotating said cartridge 1 around its longitudinal axis in any direction by approximately 2° to approximately 19°, more preferably by approximately 5° to approximately 16°, and even more preferably by approximately 13°. In another beneficial variant, not according to the invention, the recess constituting the second element 26B of the orienting-ejecting means along the edge of the head 20 of the water-treatment device 100, on the side of the seat 21, has such a length relative to the protrusion constituting the first element 9B of the orienting-ejecting means on the water-treatment cartridge 1 that the water-treatment cartridge 1 is ejected from the head 20 of the water-treatment device on rotating said cartridge 1 around its longitudinal axis in any direction by approximately 2°, more preferably by approximately 5°, and even more preferably by approximately 13°. In yet another beneficial variant, not according to the invention, the recess constituting the second element 26B of the orienting-ejecting means along the edge of the head 20 of the water-treatment device 100, on the side of the seat 21, has a smaller length relative to the protrusion constituting the first element 9B of the orienting-ejecting means on the water-treatment cartridge 1, where the length of the second element 26B of the orienting-ejecting means is smaller than that of the first element 9B of the orienting-ejecting means and is in a range from 6.1 mm to 11.1 mm, preferably from 6.1 mm to 9.1 mm, more preferably from 6.1 mm to 6.2 mm.

The size of the first element 9A, 9B of the orienting-ejecting means on the water-treatment cartridge 1 and the second element 26A, 26B of the orienting-ejecting means in the head 20 of the water-treatment device 100 is selected such that the rotation of said water-treatment cartridge 1 in said head 20 of the water-treatment device 100 within the respective is in a range indicated above or by the above-indicated value causes activation of the orienting-ejecting means and ejection of the water-treatment cartridge 1 from the head 20 of the water-treatment device 100, as it is described in detail below. The rotation of the water-treatment cartridge 1 in order to remove it from the head 20 of the water-treatment device 100 is selected according to needs. The general rule is that the smaller the rotation of the water-treatment cartridge 1, the greater the rotational force must be applied to said cartridge 1 to effectively eject the water-treatment cartridge 1 from the head 20 of the water-treatment device 100, whereas the bigger the rotation of the water-treatment insert 1, the smaller the rotational force has to be applied to said cartridge to effectively eject the water-treatment cartridge 1 from the head 20 of the water-treatment device 100. Hence, where the water-treatment device 100 is mounted in a particularly confined space significantly restricting access to said device 100, the first element 9A, 9B and the second element 26A, 26B, respectively, of the orienting-ejecting means are selected such that the rotation of the water-treatment cartridge 1 in the head 20 of the water-treatment device 100 falls within the lower of the above indicated ranges and/or values. In such case, in a particularly confined space, a small rotation of the water-treatment cartridge 1 in the head of the water-treatment device 100 causes activation of the orienting-ejecting means and ejection of said cartridge 1 from the head 20. However, where the user of the water-treatment device 100 has impaired hands, the first element 9A, 9B and the second element 26A, 26B of the orienting-ejecting means are selected such that the rotation of the water-treatment cartridge 1 in the head 20 of the water-treatment device 100 falls within the upper of the above indicated ranges and/or values. In such case, it is possible for a user with impaired hands to eject the water-treatment cartridge 1 from the head 20 of the water-treatment device applying a small rotational force. In yet another case, the first element 9A, 9B and the second element 26A, 26B of the orienting-ejecting means are selected such that the rotation of the water-treatment cartridge 1 in the head 20 of the water-treatment device 100 has a value falling within the middle ranges and/or values indicated above, for which in order to eject the water-treatment cartridge 1 from the head 20 of the water-treatment device 100 the user has to rotate said cartridge 1 in said head 20 with moderation, applying a moderate force. In such case, the user is provided with convenience while exchanging the water-treatment cartridge 1 in the water-treatment device 100 and while using said device 100 in constrained spaces.

In alternative embodiments of the head 20 of the water-treatment device 100 for the water-treatment cartridge 1, wherein the first element 9A of the orienting-ejecting means on the water-treatment cartridge 1 constitutes a protrusion, the corresponding second element 26A of the orienting-ejecting means in the head 20 of the water-treatment device 100 constitutes a groove. In such case, the groove constituting the second element 26A of the orienting-ejecting means in the head 20 of the water-treatment device 100 is configured and/or arranged in analogously as described above in relation to the protrusion in the head 20 of the water-treatment device 100, especially in preferred embodiments of the protrusion constituting the second element 26A of the orienting-ejecting means of the water-treatment device 100. And, similarly, in alternative disclosure of the head 20 of the water-treatment device 100 for the water-treatment cartridge 1, not according to the invention, wherein the first element 9B of the orienting-ejecting means on the water-treatment cartridge 1 constitutes a recess, the corresponding second element 26B of the orienting-ejecting means in the head 20 of the water-treatment device 100 constitutes a protrusion. In such case, the protrusion constituting the second element 26B of the orienting-ejecting means in the head 20 of the water-treatment device-treatment 100 is configured and/or arranged in analogously as described above in relation to the recess in the head 20 of the water-treatment device 100, especially in beneficial variants of the recess constituting the second element 26B of the orienting-ejecting means of the water-treatment device 100, not according to the invention.

The head 20 according to the invention of the water-treatment device 100 comprises a second element 27 of the positioning-adjusting means of the water-treatment device 100. The second element 27 of the positioning-adjusting means of the head 20 is arranged on the head of the water-treatment device 100 and corresponds in terms of its location and orientation with the first element 10 of the positioning-adjusting means on the water-treatment cartridge 1. In a preferred embodiment, the second element 27 of the positioning-adjusting means of the head 20 is arranged near the seat 21 of the head 20 of the water-treatment device 100. In a more preferred embodiment, the second element 27 of the positioning-adjusting means of the head 20 is arranged near the outlet of the seat 21 of the head 20 of the water-treatment device 100, as shown in Figs. 4, 7 and 8. In a preferred embodiment, in which the first element 10 of the positioning-adjusting means on the water-treatment cartridge 1 constitutes a protrusion, as described above, the corresponding second element 27 of the positioning-adjusting means in the head 20 of the water-treatment device 100 constitutes a recess, as shown in Figs. 4, 7 and 8. In an alternative embodiment, wherein the first element 10 of the positioning-adjusting means on the water-treatment cartridge 1 constitutes a recess, as described above, the corresponding second element 27 of the positioning-adjusting means on the head 20 of the water-treatment device 100 constitutes a corresponding protrusion (not shown in the figures).

In one of the embodiments, wherein the water-treatment cartridge 1 comprises one inlet channel 7, as described above, the second element 27 of the positioning-adjusting means of the head 20 of the water-treatment device 100 constitutes a delimiting element. The delimiting element constituting the second element 27 of the positioning-adjusting means of the head 20 of the water-treatment device 100 is arranged relative to the port 22 for supplying water for treatment in the head 20 of the water-treatment device 100 such that when the water-treatment cartridge is installed in the water-treatment device 100, the delimiting element of the head 20, in cooperation with the positioning element of the water-treatment cartridge 1, causes said cartridge 1 to be placed in the head 20 in only one possible position relative to said head 20 of the water-treatment device 100, in which position a fluid communication is formed with the port 22 for supplying water of the head 20 of the water-treatment device 100. In a preferred embodiment, the second element 27 of the positioning-adjusting means of the head 20 of the water-treatment device 100 substantially corresponds in terms of size with the first element 10 of the positioning-adjusting means on the water-treatment cartridge 1, allowing for only a slight rotational movement of the water-treatment cartridge 1 along its longitudinal axis in the head 20 of the water-treatment device 100.

In another embodiment, wherein the water-treatment cartridge 1 comprises two inlet channels, as described in above, the second element 27 of the positioning-adjusting means of the head 20 of the water-treatment device 100 constitutes a limiting means. The limiting element constituting the second element 27 of the positioning-adjusting means of the head 20 of the water-treatment device 100 is arranged relative to the port 22 for supplying water for treatment in the head 20 and configured such that when the water-treatment cartridge 1 is installed in the water-treatment device 100, the limiting element of the head 20, cooperating with the adjusting element of the water-treatment cartridge 1, determines the scope within which said water-treatment cartridge 1 is rotatable around its longitudinal axis in the head 20 of the water-treatment device 100, within which scope a fluid communication is formed with the port 22 for supplying water of the head 20 of the water-treatment device 100, thus allowing adjusting the flow of water for the desired treatment in the water-treatment device 100.

In yet another preferred embodiment, in addition to the positioning and/or adjusting functions, as described above, the second element 27 of the positioning-adjusting means on the head 20 of the water-treatment device 100 also performs the function of the second element 26B of the orienting-ejecting means. In other words, the second element 27 of the positioning-adjusting means for the head 20 of the water-treatment device 100 is shaped such that it allows orienting the water-treatment cartridge 1 in the head 20 of the water-treatment device 100 during mounting of said cartridge 1 and/or allows ejecting the water-treatment cartridge 1 from the head 20 of the water-treatment device 100, as described in detail above with regard to the second element 27 of the orienting-ejecting means.

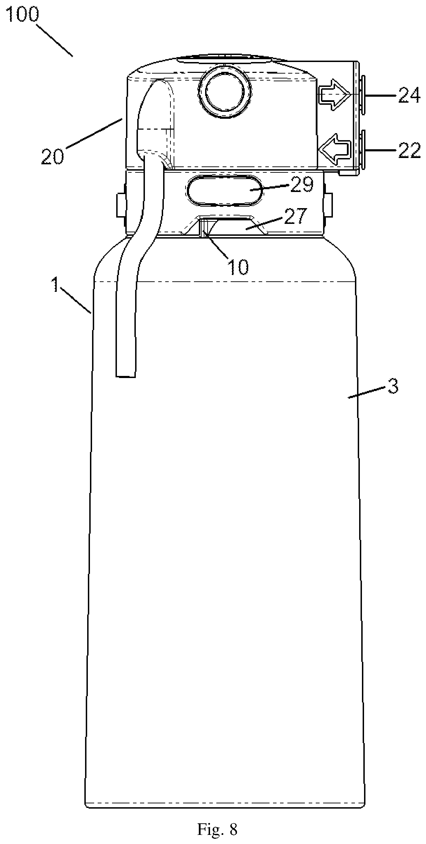

The head 20 of the water-treatment device 100 comprises a second element 28 of the mounting means of the water-treatment device 100 for mounting the water-treatment cartridge 1 in the head 20 of the water-treatment device 100. The second element 28 of the mounting means in the head 20 of the water-treatment device 100 allows mounting the cartridge 1 in the head 20 such that the water-treatment cartridge 1 is substantially translationally immovable in the axial direction of the cartridge 1 relative to the seat 21 of the head 20 of the water-treatment device 100, but allows the cartridge 1 to rotate relative to said head 20. The second element 20 of the mounting means of the water-treatment device 100 constitutes engaging elements arranged inside or near the seat 21 of the head 20 of the water-treatment device 100, which engage with the first element 11 of the mounting means of the water-treatment cartridge 1 in the head 20 of the water-treatment device 100. The engagement elements constituting the second element 29 of the mounting means of the water-treatment device 100 in the head 20 are connected to a releasing element 29 for releasing these engaging elements in order to release the water-treatment cartridge 1 to remove it from the head 20 of the water-treatment device 100. In a preferred embodiment of the head 20 of the water-treatment device 100, the engaging elements of the head 20 constitute a pair of latch cams arranged in the seat 21 of the head 20 of the water-treatment device 100, as shown in Fig. 5, which latch on the first element 11 of the mounting means arranged on the neck 5 of the water-treatment cartridge 1, as shown in Fig. 9. In the embodiment, wherein the first element 11 of the mounting means on the neck 5 of the water-treatment cartridge 1 constitutes a protrusion, as described above and as shown in Fig. 3, the latch cams of the second element 29 of the mounting means of the water-treatment device 100 latch on said protrusion of the water-treatment cartridge, as shown in Fig. 9. In an alternative embodiment, wherein the first element 11 of the mounting means on the neck 5 of the water-treatment cartridge 1 constitutes a protrusion, as described above, the latch cams of the second element 29 of the mounting means of the water-treatment device 100 latch in said groove of the water-treatment cartridge (not shown in the figures). In a preferred embodiment of the water-treatment device 1, the releasing element of the releasing means 29 of the water-treatment device 100 constitutes a cartridge replacement button arranged on the head 20 of the water-treatment device 100, as shown in Figs. 4 and 8, which is engaged with at least one latch cam for the user to manually release the water-treatment cartridge 1 by pressing the button with a finger.

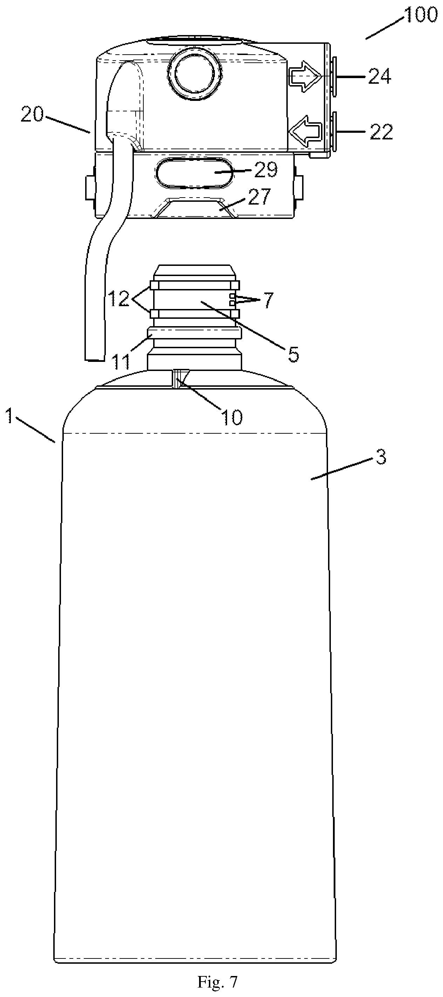

The head 20 of the water-treatment device 100 comprises a venting system for venting the water-treatment cartridge 1. In a preferred embodiment of the head 20 of the water-treatment device 100, the venting system comprises a venting channel in fluid communication with the water-treatment cartridge 1 for discharging air from said cartridge 1, a venting button for initiating and performing the venting of the cartridge 1, wherein said button is in fluid communication with the venting channel, and a venting conduit in fluid communication with the venting channel. Preferably, the venting conduit is directed along the water-treatment cartridge, as shown in Fig. 7, for directed discharging of air from the cartridge 1 during venting the water-treatment device 100. Such orientation of the venting conduit prevents splashing of water around the water-treatment device 100, if, during the venting of the water-treatment device 100, drops of water are transmitted together with the vented air or if water leaked down said venting channel.

The present invention also provides a water-treatment device 100 comprising a head 20 of the water-treatment device 100 with a water-treatment cartridge 1 arranged in the head 20 of the water-treatment device. According to the invention, the water-treatment device 100 comprises a head 20 of the water-treatment device 100 with a water-treatment cartridge 1, wherein the neck 5 of the water-treatment cartridge 1 is mounted in the seat 21 of the head 20 of the water-treatment device 100.

When mounting the cartridge 1 according to the invention for water treatment in the head 20 of the water-treatment device 100 such that the water-treatment cartridge 1 is substantially collinear with the head 20 of the water-treatment device 100, wherein the neck 5 of the water-treatment cartridge 1 is directed toward the seat 21 of the head 20 of the water-treatment device 100, as generally shown in Fig. 7. Subsequently, the water-treatment cartridge 1 according to the invention is placed in the head 20 of the water-treatment device 100 such that the neck 5 of the water-treatment cartridge 1 is slid into the seat 21 of the head 20 of the water-treatment device 100. During the sliding of the neck 5 of the water-treatment cartridge into the seat 21 of the head 20, the first element 11 of the mounting means of the water-treatment cartridge 1 engages with the second element 28 of the mounting means of the head 20 of the water-treatment device 100. The engagement of the first element 11 of the mounting means with the second element 28 of the mounting means of the water-treatment device 100 prevents the water-treatment cartridge 1 from moving along its longitudinal axis, precluding the water-treatment cartridge 1 from sliding out of the head 20 of the water-treatment device 100, however it is possible to rotate said water-treatment cartridge 1 in said head 20 of the water-treatment device 100 around its longitudinal axis. In a preferred embodiment, wherein the first element 11 of the mounting means on the water-treatment cartridge constitutes a protrusion and the second element 28 of the mounting means in the seat 21 of the head 20 of the water-treatment device 100 constitutes a pair of latch cams, the engagement of these elements 11, 28 of the mounting means of the water-treatment device 100 consists in the latching of the latch cams of the seat 21 of the head 20 on the protrusion of the water-treatment cartridge 1, as shown in Fig. 9. In such preferred embodiment, the mounting of the water-treatment cartridge 1 in the head of the water-treatment device constitutes click-latching of the mounting means of the water-treatment device 100.

Simultaneously, during entering the water-treatment cartridge 1 into the head 20 of the water-treatment device 100, the first element 9A, 9B of the orienting-ejecting means 2 of the water-treatment cartridge 1 engages the second element 26A, 26B of the orienting-ejecting means of the head 20 of the water-treatment device 100, thus precisely positioning the water-treatment cartridge 1 in the head 20 of the water-treatment device 100.

According to the invention, wherein the first element 9A of the orienting-ejecting means is arranged on the neck of the water-treatment cartridge 1 and the second element 26A of the orienting-ejecting means on the head 20 of the water-treatment device 100 is arranged correspondingly in the seat 21 of the head 20 of the water-treatment device 100, the engagement of the first element 9A of the orienting-ejecting means of the water-treatment cartridge 1 with the second element 26A of the orienting-ejecting means in the seat 21 of the head 20 of the water-treatment device 100 ensures a precise and stable placement of the neck 5 of the water-treatment cartridge 1 in the seat 21 of the head 20 of the water-treatment device 100. In a preferred embodiment, wherein the first element 9A of the orienting-ejecting means is arranged on the face of the neck 5 of the water-treatment cartridge 1, as described above and as shown in Fig. 2, and the second element 26A of the orienting-ejecting means of the head 20 of the water-treatment device 100 is arranged correspondingly at the bottom of the seat 21 of the head 20 of the water-treatment device, as described above and as shown in Fig. 5, the engagement of the first element 9A of the orienting-ejecting means of the cartridge 1 with the second element 29A of the orienting-ejecting means in the seat 21 of the head 20 of the water-treatment-device 100 ensures an even more precise and stable placement of the neck 5 of the water-treatment cartridge 1 in the seat 21 of the head 20 of the water-treatment device 100, in particular preventing lateral movements of the face of the neck 5 of the water-treatment cartridge 1 in the seat 21 of the head 20 of the water-treatment device 100. In another preferred embodiment, wherein the first element 9A of the orienting-ejecting means on the water-treatment cartridge 1 constitutes a groove and the second element 26A of the orienting-ejecting means in the seat 21 of the head 20 of the water-treatment device 100 constitutes a protrusion, the engagement of these elements 9A, 26A of the orienting-ejecting means of the water-treatment device 100 consists in entering the protrusion of the seat 21 of the head 20 into the recess of the cartridge 1, as shown in Fig. 9.

In a variant, not according to the invention, wherein the first element 9B of the orienting-ejecting means is arranged on the body 2 of the water-treatment cartridge 1 and the second element 26B of the orienting-ejecting means on the head 20 of the water-treatment device 100 is arranged correspondingly by the seat 21 of the head 20 of the water-treatment device, the engagement the first element 9B of the orienting-ejecting means of the water-treatment cartridge 1 with the second element 26B of the orienting-ejecting means in the seat 21 of the head 20 of the water-treatment device 100 ensures a precise and stable placement of the water-treatment cartridge 1 by the entrance to the seat 21 of the head 20 of the water-treatment device 100. In yet more beneficial variant, not according to the invention, wherein the first element 9B of the orienting-ejecting means is arranged radially on the body 2 of the water-treatment cartridge 1 by the base of the neck 5, as described above and as shown in Figs. 1 and 2, and the second element 26B of the orienting-ejecting means of the head 20 of the water-treatment device 100 is arranged correspondingly by the edge of the head 20 of the water-treatment device and at a distance from the seat 21, as described above and as shown in Fig. 5, the engagement of the first element 9B of the orienting-ejecting means of the cartridge 1 with the second element 29B of the orienting-ejecting means of the head 20 of the water-treatment-device 100 at a distance from the seat 21 ensures a precise and stable placement of the water-treatment cartridge 1 in the seat 21 of the head 20 of the water-treatment device 100, in particular preventing lateral movements of the body 2 of the water-treatment cartridge 1 relative to the head 20 of the water-treatment device 100. In a beneficial variant, not according to the invention, wherein the first element 9B of the orienting-ejecting means on the water-treatment cartridge 1 constitutes a protrusion and the second element 26B of the orienting-ejecting means on the head 20 of the water-treatment device 100 constitutes a recess, the engagement of these elements 9B, 26B of the orienting-ejecting means of the water-treatment device 100 consists in entering the protrusion of the water-treatment cartridge 1 into the recess on the head 20 of the water-treatment device.

Simultaneously, during entering of the water-treatment cartridge 1 into the head 20 of the water-treatment device 100, the first element 10 of the orienting-ejecting means on the body 2 of the water-treatment cartridge 1 engages with the second element 27 of the positioning-adjusting means on the head 20 of the water-treatment device 100. In a preferred embodiment, wherein the first element 10 of the positioning-adjusting means is arranged on the body 2 at the base of the neck 5 of the water-treatment cartridge 1, as shown in Fig. 1, and the second element 27 of the positioning-adjusting means on the head 20 of the water-treatment device 100 is arranged correspondingly near the seat 21 of the head 20 of the water-treatment device 100, the engagement of the first element 10 of the positioning-adjusting means of the water-treatment cartridge 1 with the second element 27 of the positioning-adjusting means in the seat 21 of the head 20 of the water-treatment device 100 takes place in the vicinity of the neck 5 of the water-treatment cartridge 1, as shown in Fig. 8. In a preferred embodiment, wherein the first element 10 of the positioning-adjusting means on the water-treatment cartridge 1 constitutes a protrusion, as shown in Fig. 2, and the second element 27 of the positioning-adjusting means in the seat 21 of the head 20 of the water-treatment device 100 constitutes a recess, as shown in Fig. 7, the engagement of these elements 10, 27 of the positioning-adjusting means of the water-treatment device 100 consists in entering of the protrusion of the cartridge 1 into the recess of the seat 21 of the head 20, as shown in Fig. 8.

In the embodiment, wherein the first element 10 of the positioning-adjusting means on the water-treatment cartridge 1 constitutes a positioning element, as described in detail above, the engagement of the positioning element with the second element 27 of the positioning-adjusting means in the head 20 of the water-treatment device 100 causes the water-treatment cartridge 1 to be placed in the head 20 of the water-treatment device 100 substantially only in one possible rotational position of said cartridge 1 relative said head 20. In this position, a fluid flow communication is formed between the port 22 for supplying water of the head 20 of the water-treatment device 100, arranged on the side wall of the seat 21 of the head 20, with the inlet channel 7 of the water-treatment cartridge 1, arranged on the side wall of the neck 5 of the body 2 of the water-treatment cartridge 1, as shown in Fig. 9. In such case, after the mounting of the water-treatment cartridge 1 in the water-treatment device 1, it additionally has the possibility to rotate relative to the head 20 of the device 100 beyond the delimited position. That is, the water-treatment cartridge 1 is not movable from and to the head 20, but is movable rotatably beyond the scope of the position, as described above for the water-treatment cartridge 1 with a single inlet channel 7.

In the embodiment, wherein the first element 10 of the positioning-adjusting means of the water-treatment cartridge 1 constitutes an adjusting element, as described in detail above, the engagement of the adjusting element with the second element 27 of the positioning-adjusting means in the head 20 of the water-treatment device 100 causes the water-treatment cartridge 1 to be placed in the head 20 of the water-treatment device 100 and it is possible to adjust the water-treatment cartridge 1 in the head 20 of the water-treatment device by rotating said cartridge 1 in said head 20 within a predetermined angular range around the longitudinal axis of said cartridge 1, as described above. In this case, rotating the water-treatment cartridge around its longitudinal axis allows forming a fluid communication between the water supplying port 22 of the head 20 of the water-treatment device 100 arranged on the side wall of the seat 21 of the head 20, with at least one inlet channel from among two inlet channels of the water-treatment cartridge 1 arranged on the side wall of the neck 5 of the body 2 of the water-treatment cartridge 1, thus allowing adjusting, as needed, the amount of water flowing into the water-treatment cartridge 1 through the first inlet channel and/or the second inlet channel, as shown in Fig. 9, based on the example of one of the inlet channels of the water-treatment cartridge 1. In such case, after mounting of the water-treatment cartridge 1 in the water-treatment device 100, it is additionally rotatable relative to the head 20 of the device 100 beyond the adjustment range, that is, it is not movable from and to the head 2, but it is movable rotatably within and beyond the adjustment range, as described above in relation to the water-treatment cartridge 1 with two inlet channels 7.

Simultaneously, entering the water-treatment cartridge 1 into the head 20 of the water-treatment device 100 and engaging the first element 11 of the mounting means with the second element 28 of the mounting means of the water-treatment device also causes the formation of a fluid communication between the port 24 for discharging water from the head 20 of the water-treatment device 100 with the outlet channel 8 of the water-treatment cartridge 1, allowing water to flow from the water-treatment cartridge 1 after treatment. More specifically, after placing the water-treatment cartridge 1 in the head 20 of the water-treatment device 100, as described above, a fluid communication is formed between the port 24 for discharging water from the head 20 of the water-treatment device 100 arranged at the bottom of the seat 21 of the head 20, with the outlet channel 8 of the water-treatment cartridge 1 arranged on the face of the neck 5 of the body 2 of the water-treatment cartridge 1, as shown in Fig. 9.

In a preferred embodiment of the head 20 of the water-treatment device 100, comprising the terminating means 23, 25 of the ports 22, 24, during placing the water-treatment cartridge 1 in the head 20 of the device 100, the terminating means 23 of the port 22 of the head 20 of the water-treatment device 100 are unlocked, unlocking the fluid communication for water to be supplied to the water-treatment cartridge 1, and also the terminating means 25 of the port 23 of the head 20 of the water-treatment device 100 are unlocked, unlocking the fluid communication for water to be discharged from the water-treatment cartridge 1. In preferred embodiments with at least one divider in the at least one inlet channel 7 and/or the outlet channel 8, respectively, as described above, such at least one divider cooperates with the terminating means 23 and/or terminating means 25, respectively, assisting the opening of the terminating means 23, 25, improving the flow of water into the cartridge 1 for the treatment to said water and/or out of the cartridge 1 after treatment of said water.

In a preferred embodiment of the head 20 of the water-treatment device 100 comprising a venting system, as described above, the hydraulic system of the water-treatment device 100 is vented, in particular the water-treatment cartridge 1 is vented, by pressing the venting button.

Following mounting of the water-treatment cartridge 1 in the head 20 of the water-treatment device 100, the sealing means 12 of the cartridge are engaged with the head 20 of the water-treatment device 100 preventing water after treatment in the cartridge 1 from mixing, and preventing water from leaking from the water-treatment device 100 within the perimeter of the cartridge 1 and the head 20. In a preferred embodiment, wherein the sealing means 12 constitute sealing rings arranged on the neck of the water-treatment cartridge 1 on both sides of the inlet channel/inlet channels 7, as described above, the sealing in the form of a sealing ring closer to the face of the neck 5 of the water-treatment cartridge 1 separates the inlet channel/inlet channels 7 from the outlet channel 8 and prevents mixing of the water flowing into the water-treatment cartridge 1 for treatment through the water-supplying port 22 with the water flowing out of the water-treatment cartridge 1 after treatment through the outlet channel 8. Thus, the sealing separation by means of said sealing ring allows maintaining the quality of the water subjected to treatment in the water-treatment cartridge 1. On the other hand, the sealing by means of the sealing ring closer to the base of the neck 5 of the water-treatment cartridge 1 ensures tightness between the neck 5 of the water-treatment cartridge and the seat 21 of the head 20 of the water-treatment device 100, thus preventing water from leaking out of the seat 21 of the head 20 of the water-treatment device 100.

Thus, installation of the water-treatment cartridge 1 in the head 2 of the water-treatment device 100, as described above, consists practically in sliding the neck 5 of the water-treatment cartridge 1 into the seat 21 of the head 20 of the water-treatment device 100 until the engagement of the elements 11, 28 of the mounting means, the elements 9A, 9B, 26A, 26B of the orienting-ejecting means of the water-treatment device 100 and the elements 10, 27 of the positioning-adjusting means of the water-treatment device 100, ensuring specific orientation of the water-treatment cartridge 1 in the head 20 of the water-treatment device 100 in the position, as described above in detail. Alternatively, before or during sliding the cartridge 1 into the head 2 of the device 100, as described above, it may be necessary to rotate the water-treatment cartridge 1 around its longitudinal axis in order to orient the elements 10, 27 of the positioning-adjusting means of the water-treatment cartridge 1 and the head 20 of the water-treatment device, respectively, until they are engaged, as described above.

In the event of a necessity to uninstall or exchange the water-treatment cartridge 1, for example due to a damage to the water-treatment cartridge 1, loss of the water-treatment properties by the cartridge 1, the releasing element 29 of the mounting means on the head 20 of the water-treatment device 100 has to be activated to release the second element 28 of the mounting means of the head 20 of the water-treatment device 100 in order to release said second element 28 from the first element 11 of the water-treatment cartridge 1. In a preferred embodiment, releasing the water-treatment cartridge 1 in the head 20 of the water-treatment device takes place by pressing the water-treatment cartridge 1 release button on the head 20 in order to disengage the pair of the latch cams of the head 20 of the water-treatment device 100 from the protrusion of the water-treatment cartridge 1. When the first element 11 and the second element 28 of the mounting means of the water-treatment device 100 are in the disengaged condition, said cartridge 1 can be removed from said head 20 of the water-treatment device 100.

To facilitate the sliding-out of the water-treatment cartridge 1 from the head 20 of the water-treatment device 100, with the mounting means of the water-treatment device 100 being released, as described above, said cartridge 1 has to be rotated in the head 20 of the water-treatment device around the longitudinal axis of said cartridge 1 within the range described above, wherein the rotation of the cartridge 1 in the head 20 causes the activation of the first element 9A, 9B of the orienting-ejecting means on the cartridge 1 together with the second element 26A, 26B of the orienting-ejecting means in the head 20 of the water-treatment device 100 and ejection of said cartridge 1 from said head. As a result of activation of the elements 9A, 9B, 26A, 26B of the orienting-ejecting means of the water-treatment device 100, the user does not have to apply force along the longitudinal axis of the cartridge 1 in order to remove the water-treatment cartridge 1 from the head of the water-treatment device. The assisted removal of the water-treatment cartridge 1 from the head 20 of the water-treatment device 100 is particularly useful in the event of jamming of the water-treatment cartridge 1 in the head 20 of the water-treatment device as a result of the sealing means 12 becoming glued to the water-treatment cartridge 1 and the head 20 of the water-treatment device 100. The activation of the orienting-ejecting means of the water-treatment device 100 is then particularly useful when the water-treatment device 100 is installed in a constrained space, such as a kitchen sink cabinet. In one of the embodiments, according to the invention, wherein the first element 9A of the orienting-ejecting means on the water-treatment cartridge 1 is arranged on the face of the neck 5 of the body 2 of water-treatment cartridge 1, as described above, and the corresponding second element 26A of the orienting-ejecting means of the head 20 is arranged at the bottom of the seat 21 of said head 20 of the water-treatment device, is particularly useful as rotating the water-treatment cartridge 1 in the seat 21 of the head 20 of the water-treatment device 100 within the range of operation of the orienting-ejecting means results in generation of an axial force pushing the cartridge 1 out of the head, in the area of the bottom of the seat 21 of the head 20, wherein the pressure of the hydraulic system of the water-treatment device 100 is present, and in the area in which there may be sediments and other solid impurities additionally hampering removal of the water-treatment cartridge 1 from the head of the water-treatment device 100. In another embodiment, not according to the inversion, wherein the first element 9B of the orienting-ejecting means on the water-treatment cartridge 1 is arranged on the body 2 of the water-treatment cartridge 1 at the base of the neck 5, as described above, and the corresponding second element 26B of the orienting-ejecting means of the head 20 is arranged in the vicinity of the seat 21 of the head 20 of the water-treatment device, as described above, is also particularly useful as rotating the water-treatment cartridge 1 in the seat 21 of the head 20 of the water-treatment device 100 within the range of operation of the orienting-ejecting means results in generation of a force pushing the cartridge 1 out of the head 20 in the area between the cartridge 1 and the head 20 of the water-treatment device 100, which is located before the area in which the pressure of the hydraulic system of the water-treatment device 100 is present and in which there may be sediments and other solid impurities.

In a preferred embodiment, wherein the positioning-adjusting means also perform the ejecting function, as described above, during rotating the cartridge 1 in the head 20 of the water-treatment device 100 also the first element 10 of the positioning-adjusting means on the cartridge 1 is activated together with the second element 27 of the positioning-adjusting means in the head 20 of the water-treatment device 100 and an assisted ejection of said cartridge 1 from the head 20 occurs, as described above in relation to the orienting-ejecting means.

In a preferred embodiment of the head 20 of the water-treatment device 100 comprising the terminating means 23, 25 of the ports 22, 24 of the head 20, during removal of the water-treatment cartridge 1 from the head 20 of the water-treatment device 100, the terminating means 23 of the port 22 of the head 20 of the water-treatment device 100 are activated, thus terminating the fluid communication for supplying water to the seat 21 of the device 100 from the port 22, and the terminating means 25 of the port 23 of the head 20 of the water-treatment device 100 are activated, thus terminating the fluid communication for the water which might flow back to the seat 21 of the head 20 of the water-treatment device 100. This prevents the flooding of the environment in which the water-treatment device 100 is located during removing or after removing the water-treatment cartridge 1 from the device 100, that is, when the water-treatment cartridge 1 slides out of the seat 21 of the head 20 of the water-treatment device 100 or is no longer inside it.

After removing the water-treatment cartridge 1, a new water-treatment cartridge 1 or a regenerated water-treatment cartridge 1 can be installed, as described above.

In one of particular embodiments of the water-treatment device 100, the water-treatment cartridge 1 comprises one inlet channel 7 for supplying water for treatment into the water-treatment cartridge 1, wherein said inlet channel 7 is arranged on the side of the neck 5 of the body 2 of the water-treatment cartridge 1, as described above and as shown in Fig. 3. The first element 9A of the orienting-ejecting means constitutes a groove and is arranged on the face of the neck 5 of the body 2 of the water-treatment cartridge, as shown in Figs. 1 and 2. The groove constituting the first element 9A of the orienting-ejecting means extends approximately 54% around the circumference of the neck 5 of the water-treatment cartridge 1, which amounts to approximately 193° and approximately 32.2 mm in rolled length. The second element 26A of the orienting-ejecting means constitutes a protrusion and is arranged complementarily at the bottom of the seat 21 of the head 20 of the water-treatment device 100, as shown in Figs. 4 and 5. The protrusion constituting the second element 26A of the orienting-ejecting means extends approximately 53% about the circumference of the seat 21 of the head 20 of the water-treatment device 100, which amounts to approximately 190° and approximately 31.0 mm in rolled length. The above-indicated configuration of the water-treatment cartridge 1 and of the head 20 of the water-treatment device 100, respectively, results in that rotating said cartridge 1 by 13° in any direction along its longitudinal axis in said head 20 of the water-treatment device 100 beyond the range defined by the positioning-adjusting means, as described in detail above, causes activation of the orienting-ejecting means, as described in detail above, and ejection the water-treatment cartridge 1 from the head 20 of the water-treatment device.

In another particular embodiment of the water-treatment device 100, the water-treatment cartridge 1 comprises two inlet channels 7 for supplying water for treatment into the water-treatment cartridge 1, wherein said two inlet channels 7 are arranged on the side of the neck 5 of the body 2 of the water-treatment cartridge 1, as described above and as shown in Fig. 3. Moreover, in said particular embodiment, the two inlet channels 7 are arranged on the side of the neck 5 of the body 2 one next to the other such that they are arranged in a line parallel to the face of the neck 5 (not shown in the figures). The first element 9A of the orienting-ejecting means constitutes a groove and is arranged on the face of the neck 5 of the body 2 of the water-treatment cartridge, as shown in Figs. 1 and 2. The groove constituting the first element 9A of the orienting-ejecting means extends for approximately 64% around the circumference of the neck 5 of the water-treatment cartridge 1, which amounts to approximately 230° and approximately 39 mm in rolled length. The second element 26A of the orienting-ejecting means constitutes a protrusion and is arranged complementarily at the bottom of the seat 21 of the head 20 of the water-treatment device 100, as shown in Figs. 4 and 5. The protrusion constituting the second element 26A of the orienting-ejecting means extends approximately 53% around the circumference of the seat 21 of the head 20 of the water-treatment device 100, which amounts to approximately 190° and approximately 31.0 mm in rolled length. The above-mentioned configuration of the water-treatment cartridge 1 and of the head 20 of the water-treatment device 100, respectively, results in there being provided a rotational adjustment delimited by the positioning-adjusting means by rotating the water-treatment cartridge 1 around its longitudinal axis in the head 20 of the water-treatment device, as described above, within the range of approximately 27°. Whereas further rotation by approximately 13° in any direction along its longitudinal axis in said head 20 of the water-treatment device 100 and beyond the range defined by the positioning-adjusting means, causes activation of the orienting-ejecting means, as described in detail above, and ejection of the water-treatment cartridge 1 from the head 20 of the water-treatment device.

In beneficial variant of the water-treatment device 100 described above, not according to the invention, the water-treatment cartridge 1 comprises another first element 9B of the orienting-ejecting means, wherein said first element 9B of the orienting-ejecting means has the form of a protrusion arranged radially on the body 2 of the cartridge 1 at the base of the neck, as shown in Figs. 1 and 2, whereas the head 20 comprises a corresponding second element 26B of the orienting-ejecting means in the form of a recess arranged along the edge of the head at a distance from the seat 21, as shown in Figs. 4 and 5. In such preferred embodiments of the particular embodiments, the water-treatment cartridge thus comprises a first element 9A of one orienting-ejecting means, according to the invention, and a first element 9B of the further orienting-ejecting means, not according to the invention, and the head 20 thus comprises a corresponding second element 26A of one orienting-ejecting means, according to the invention, and a second element 26B of the further orienting-ejecting means, not according to the invention. In embodiments, not according to the invention, the first element 9B of the further orienting-ejecting means is arranged on the water-treatment cartridge 1 opposite the first element 10 of the positioning-adjusting means, as shown in Figs. 1 and 2, while the corresponding second element 26B of the orienting-ejecting means is arranged on the head 20 opposite the corresponding second element 27 of the positioning-adjusting means, as shown in Figs. 4, 5. An advantage of the latter variant is that during the rotation of the cartridge 1 around its longitudinal axis in order to remove the cartridge 1 from the head 20, the following are generated: an ejection force generated by one orienting-ejecting means arranged on the face of the neck 5 of the cartridge 1 and at the bottom of the seat 21 of the head 20 of the water-treatment device 100, respectively, acting substantially in the vicinity of the longitudinal axis of the cartridge 1 and with a point of application in the area of the face of the neck 5 of said cartridge 1; an ejecting force generated by the further orienting-ejecting means arranged on the body 2 of the cartridge 1 at the base of the neck 5 and on the head 20 of the water-treatment device 100, at a distance from the seat 21, respectively, acting far from the longitudinal axis of the cartridge 1 and with a point of application of said force to the body 2 of the cartridge 1 far from its longitudinal axis; and an ejection force generated by the positioning-adjusting means arranged on the cartridge 1 and on the head 20, acting also far from the longitudinal axis of the cartridge 1 and with a point of application of said force to the body 2 of the cartridge 1 far from its longitudinal axis, wherein said force is generated symmetrically to the ejection force generated by the further orienting-ejecting means. In such configuration, ejection of the cartridge 1 from the head 20 of the water-treatment device 100 is particularly easy as the ejection forces act substantially in the longitudinal axis of the cartridge 1 and at a distance on the opposite sides of the longitudinal axis of the cartridge 1.

Thus, the water-treatment cartridge according to the invention, the head 20 according to the invention, and the water-treatment device 100 according to the invention comprising such cartridge 1 and such head 20 provide a technical solution whereby there is provided a simple construction of the mounting of the water-treatment cartridge 1 in the head 20 of the water-treatment device 100, allowing fast and easy mounting of said cartridge 1 in the head 20, simultaneously providing precise placement and stabilization of the water-treatment cartridge 1 in the head 20 of the water-treatment device 100, and in which ejecting the water-treatment cartridge 1 from the head 20 of the water-treatment device 100 is facilitated, especially in confined spaces, such as sink cabinets.

Based on the above disclosure, a specialist in the field would be aware that certain technical aspects may be realized in many different ways. For example, one of the first and the second elements of specific means were described as a protrusion, whereas the second of the first and second elements of said means were described as a corresponding groove or recess, a specialist in the field would be aware that the opposite configuration of the protrusion and a groove/recess can be applied. Based on said disclosure a specialist in the field would be aware how to realize such opposite configuration while maintaining the functions of individual elements, technical effects and advantages, as described in detail above.

The water-treatment cartridge 1 is described above with omission of certain components. A specialist in the field would be aware that application of one or more inlet channels in the water-treatment cartridge 1 would necessitate application of a specified system for running water inside said cartridge. Moreover, a specialist in the field would be aware that elements maintaining a water-treatment bed/beds, elements separating a water-treatment bed/beds and other required components of the water-treatment cartridge 1 shall be used in the cartridge.

In the present invention, a water-treatment cartridge such as the one disclosed in the patent application No. P.422621 filed on 23 August 2017 can be used. In the present invention, a water-treatment cartridge such as the one disclosed in the patent application No. P.422470 filed on 23 August 2017 can be used. Based on this disclosure, a specialist in the field would know how to apply the disclosure in the above-indicated patent applications in order to apply the water-treatment cartridges disclosed therein to this invention.

It is described above that the body 2 of the water-treatment cartridge 1 comprises sealing means 12 for sealing the connection between the water-treatment cartridge 1 and the head 20 of the water-treatment device 100, after its mounting in said device 100. In an alternative embodiment, rather than on the body 2 of the water-treatment cartridge 1, the sealing means 12 are arranged in the head 20 of the water-treatment device for sealing the connection between the water-treatment cartridge 1 and the head 20 of the water-treatment device 100, after its mounting in said device 100. In a preferred embodiment, the sealing means 12 constitute sealing rings arranged in the seat 21 of the head 20 of the water-treatment device 100. In another preferred embodiment, the sealing means 12 constitute two sealing rings on in the seat 21 of the head 20 of the water-treatment device, whereby one of them is arranged on one side relative to the port 22 for supplying water for treatment to the water-treatment cartridge 3, whereas the other one of them is arranged opposite said port for supplying water to the water-treatment cartridge 1. If necessary, the sealing means 12 can also be provided on the body 2 of the water-treatment cartridge 1 and in the head 20 of the water-treatment device 100, respectively.

The device 100 according to the invention for water treatment is described above as comprising one head 20. However, the water-treatment device 1 may comprise more than one head 20, therein water-treatment cartridges 1 are placed individually. Depending on the needs, the water-treatment device 100 may comprise two, three or more heads 20, in which heads 20 the same or different water-treatment cartridges 1 can be mounted, that is, cartridges 1 performing the same or different water treatments, as described above in detail. A specialist in the field would know that these two or more heads 2 may be interconnected in series to perform a subsequent treatment or in parallel to perform a joint water treatment.

The invention is described above using the preferred embodiments only by way of example. Based on the above disclosure, a specialist would recognize that modifications, variants or equivalents are possible. The scope of the invention is defined by the attached claims.

### List of elements

- 1: Water-treatment cartridge
- 2: Body of the water-treatment cartridge 1
- 3: Cylindrical portion of the body 2 of the water-treatment cartridge 1
- 4: Bottom of the body 2 of the water-treatment cartridge 1
- 5: Neck of the body 2 of the water-treatment cartridge 1
- 6: Internal chamber of the water-treatment cartridge 1
- 7: Inlet channel for supplying water for treatment to the water-treatment cartridge 1
- 8: Outlet channel for discharging water after treatment from the water-treatment cartridge 1
- 9A, 9B: First element of the orienting-ejecting means of the water-treatment device 100
- 10: First element of the positioning-adjusting means of the water-treatment device 100
- 11: First element of the mounting means of the water-treatment device 100
- 12: Sealing means of the water-treatment cartridge 1
- 20: Head of the water-treatment device 100
- 21: Seat of the head 20 of the water-treatment device
- 22: Port for supplying water for treatment to the water-treatment cartridge 1
- 23: Terminating means of the port 22 for supplying water to the head 20
- 24: Port for discharging water after treatment from the water-treatment cartridge 1
- 25: Terminating means of the port 24 for discharging water from the head 20
- 26A, 26B: Second element of the orienting-ejecting means of the water-treatment device 100
- 27: Second element of the positioning-adjusting means of the water-treatment device 100
- 28: Second element of the mounting means of the water-treatment device 100
- 29: Releasing element of the mounting means of the head 20
- 100: Water-treatment device

## Claims

1. A water-treatment cartridge (1) for a water-treatment device (100), wherein the water-treatment cartridge (1) comprises:
a body (2) comprising a cylindrical portion (3), the cylindrical portion (3) being closed by a bottom (4) at one end and the cylindrical portion (3) narrowing down into a neck (5) at other end, the neck (5) of the cartridge (1) comprising a face and an edge,
at least one inlet channel (7) for supplying water for treatment to the water-treatment cartridge (1),
an outlet channel (8) for discharging water after treatment from the water-treatment cartridge (1),
at least one water-treatment bed, which said at least one water-treatment bed is in a fluid communication with the inlet channel (7) for supplying water for treatment to the bed and with the outlet channel (8) for discharging water after treatment in the bed,
a first element (11) of the mounting means for mounting the cartridge (1) in the water-treatment device (100), wherein the first element (11) of the mounting means is configured for mounting the cartridge (1) in the device (100) substantially immovably along the longitudinal axis of the water-treatment cartridge (1) and rotatably around the longitudinal axis of the water-treatment cartridge (1),
a first element (10) of the positioning-adjusting means, wherein the first element (10) of the positioning-adjusting means is configured for one of orienting of the water-treatment cartridge (1) in the water-treatment device (100) and adjusting of the water-treatment cartridge (1) in the water-treatment device (100) by rotating said water-treatment cartridge (1) in the water-treatment device (100), and
a first element (9A) of the orienting-ejecting means, wherein the first element (9A) of the orienting-ejecting means is configured for positioning the water-treatment cartridge (1) in the water-treatment device (100), when the cartridge (1) is mounted in the device (100), and for ejecting the water-treatment cartridge (1) from the water-treatment device (100) during removing the cartridge (1) from the device (100) by rotating said cartridge (1) around its longitudinal axis,
**characterized in that**
said first element (9A) of the orienting-ejecting means is arranged on the face of the neck (5) of the body on a circular segment along the edge of said neck (5).

2. A water-treatment cartridge (1) according to claim 1, **characterized in that** said at least one inlet channel (7) and outlet channel (8) are arranged on the neck (5) of the body (2).

3. A water-treatment cartridge (1) according to claim 1, **characterized in that** said first element (9A) of the orienting-ejecting means is selected from a group comprising a protrusion, a groove and a recess.

4. A water-treatment cartridge (1) according to claim 1, **characterized in that** said first element (9A) is arranged on a portion constituting from approximately 10% to approximately 80% of the circumference of the neck (5), preferably from approximately 30% to approximately 70% of the circumference of the neck (5), more preferably from approximately 40% to approximately 70% of the circumference of the neck (5) and most preferably approximately 65% of the circumference of the neck (5) of the water-treatment cartridge (1).

5. A head (20) for a water-treatment device (100), comprising
a water-supplying port (22) for supplying water to the water-treatment device (100),
a water-discharging port (24) for discharging water after treatment from the device (100),
a second element (28) of the mounting means, wherein said element (28) of the mounting means is configured for mounting the water-treatment cartridge (1) in the head (20) substantially immovably along the longitudinal axis of the water-treatment cartridge (1) and rotatably around the longitudinal axis of the water-treatment cartridge (1),
a second element (27) of the positioning-adjusting means, wherein the second element (27) of the positioning-adjusting means is configured for one of orienting the water-treatment cartridge (1) in the water-treatment device (100) and adjusting the water-treatment cartridge (1) in the water-treatment device (100) by rotating said water-treatment cartridge (1) in the water-treatment device (100),
a second element (26A) of the orienting-ejecting means, wherein the second element (26A) of the orienting-ejecting means is configured for stabilizing the position of the water-treatment cartridge (1) in the water-treatment device (100), when the cartridge (1) is mounted in the device (100), and for ejecting the water-treatment cartridge (1) from the water-treatment device (100) during removing the cartridge (1) from the device (100) by rotating said cartridge (1) around its longitudinal axis, and
a seat (21) of the head (20) comprising a bottom and a side wall,
**characterized in that**
said second element (26A) of the orienting-ejecting means is arranged at the bottom of the seat (21) on a circular segment along the side wall of said seat (21) of the head (20).

6. A head (20) according to claim 5, **characterized in that** said second element (26A) of the orienting-ejecting means is complementarily selected from a group comprising a protrusion, a groove and a recess.

7. A water-treatment device (100), comprising
a head (20), wherein the head (20) comprises
a water-supplying port (22) for supplying water to the water-treatment device (100) for treatment,
a water-discharging port (24) for discharging water after treatment from the device (100) for use,
a second element (28) of the mounting means of the water-treatment device (100),
a second element (27) of the positioning-adjusting means of the water-treatment device (100),
a second element (26A) of the orientating-ejecting means of the water treatment device (100),
a seat (21) of the head (20) comprising a bottom and a side wall (21), and
a water-treatment cartridge (1) arranged in the head (20) of the water-treatment device (100), wherein the water-treatment cartridge (1) comprises
a body (2) comprising a cylindrical portion (3), the cylindrical portion (3) being closed by a bottom (4) at one end and the cylindrical portion (3) narrowing down into a neck (5) at other end, the neck (5) of the cartridge (1) comprising a face and an edge,
at least one inlet channel (7) for supplying water for treatment to the water-treatment cartridge (1),
an outlet channel (8) for discharging water after treatment from the water-treatment cartridge (1),
at least one water-treatment bed, wherein said at least one water-treatment bed is in a fluid communication with the inlet channel (7) for supplying water for treatment to the bed and with the outlet channel (8) for discharging water after treatment in the bed,
a first element (11) of the mounting means for mounting the water-treatment cartridge (1) in the water-treatment device (100), wherein, when the first element (11) and the second element (28) of the mounting means of the water-treatment device (100) are engaged, the water-treatment cartridge (1) is arranged in the head (20) of the water-treatment device (100) substantially immovably along the longitudinal axis of the water-treatment cartridge (1) relative to the head (20) and rotatably around the longitudinal axis of the water-treatment cartridge (1) relative to the head (20), and a fluid communication is formed between the outlet channel (8) of the cartridge (1) and the water-discharging port (24) in order to discharge water after treatment from the water-treatment device (100),
a first element (10) of the positioning-adjusting means, wherein, when the first element (10) and the second element (27) of the positioning-adjusting means are engaged, a configuration is achieved from among the following:
the water-treatment cartridge (1) is oriented in the head (20) of the water-treatment device (100) such that a fluid communication is formed between the inlet channel (7) of the cartridge (1) and the water-supply port (22) of the head (20) in order to supply water for treatment to the water-treatment cartridge (1),
the water-treatment cartridge (1) is arranged in the head (20) of the water-treatment device (100) such that a fluid communication is formed with at least one inlet channel (7) of the cartridge (1) with the port (22) of the head (20), and allow to adjust the amount of water supplied for treatment to the cartridge (1) through said at least one inlet channel (7) by rotating said water-treatment cartridge (1) around the longitudinal axis of the water-treatment cartridge (1) relative to the head (20) of the device (100,) and
a first element (9A) of the orienting-ejecting means, arranged on the water-treatment cartridge (1), wherein, when the first element (9A) and the second element (26A) of the orienting-ejecting means are engaged, the position of the water-treatment cartridge (1) in the head (20) of the water-treatment device (100) is stabilized, when the cartridge (1) is mounted in the head (20) of the device (100), and there is provided ejection of the water-treatment cartridge (1) from the head (20) of the water-treatment device (100) during removal of the cartridge (1) from the device (100) by rotating said cartridge (1) around its longitudinal axis relative to the head (20) of the water-treatment device (100),
**characterized in that**
said first element (9A) of the orienting-ejecting means is arranged on the face of the neck (5) of the body on a circular segment along the edge of said neck (5), and said second element (26A) of the orienting-ejecting means is arranged complementarily at the bottom of the seat (21) on a circular segment along the side wall of said seat (21) of the head (20) of the water-treatment device (100).

8. A water-treatment device (100) according to claim 7, **characterized in that** said at least one inlet channel (7) and the outlet channel (8) are arranged on the neck (5) of the water-treatment cartridge (1), whereas said water-supply port (22) is arranged in the seat (21) of the head (20) of the water-treatment device (100).

9. A water-treatment device (100) according to claim 7, **characterized in that** said first element (9A) of the orienting-ejecting means is selected from a group comprising a protrusion, a groove and a recess, whereas said second element (26A, 26B) of the orienting-ejecting means is complementarily selected from a group including a protrusion, a groove, a recess.

10. A water-treatment device (100) according to claim 7, **characterized in that** said first element (9A) is arranged on a portion constituting from approximately 10% to approximately 80% of the circumference of the neck (5), preferably from approximately 30% to approximately 70% of the circumference of the neck (5), more preferably from approximately 40% to approximately 70% of the circumference of the neck (5) and most preferably approximately 65% of the circumference of the neck (5) of the water-treatment cartridge (1).

11. A water-treatment device (100) according to claim 7, **characterized in that** said second element (26A) of the orienting-ejecting means of the head (20) has such a length relative to said first element (9A) of the orienting-ejecting means on the water-treatment cartridge (1) is ejected from said head (20) on rotating said cartridge (1) around its longitudinal axis in any direction by approximately 5° to approximately 19°, more preferably by approximately 8° to approximately 16°, and even more preferably by approximately 13°.

## Patentansprüche

1. Wasserbehandlungskartusche (1) für eine Wasserbehandlungsvorrichtung (100), wobei die Wasserbehandlungskartusche (1) Folgendes umfasst:
einen Körper (2), umfassend einen zylindrischen Abschnitt (3), wobei der zylindrische Abschnitt (3) an einem Ende durch einen Boden (4) verschlossen ist und sich der zylindrische Abschnitt (3) am anderen Ende zu einem Hals (5) verjüngt, wobei der Hals (5) der Kartusche (1) eine Stirnfläche und eine Kante umfasst,
mindestens einen Einlasskanal (7) zum Zuführen von Wasser zur Behandlung in die Wasserbehandlungskartusche (1),
einen Auslasskanal (8) zum Ablassen von Wasser nach der Behandlung aus der Wasserbehandlungskartusche (1),
mindestens ein Wasserbehandlungsbett, wobei das mindestens eine Wasserbehandlungsbett in Fluidverbindung mit dem Einlasskanal (7) zum Zuführen von Wasser zur Behandlung in das Bett und mit dem Auslasskanal (8) zum Ablassen von Wasser nach der Behandlung im Bett steht,
ein erstes Element (11) der Anbringungseinrichtung zum Anbringen der Kartusche (1) in der Wasserbehandlungsvorrichtung (100), wobei das erste Element (11) der Anbringungseinrichtung zum Anbringen der Kartusche (1) in der Vorrichtung (100) im Wesentlichen unverschiebbar entlang der Längsachse der Wasserbehandlungskartusche (1) und drehbar um die Längsachse der Wasserbehandlungskartusche (1) ausgebildet ist,
ein erstes Element (10) der Positionier-Einstelleinrichtung, wobei das erste Element (10) der Positionier-Einstelleinrichtung entweder zum Ausrichten der Wasserbehandlungskartusche (1) in der Wasserbehandlungsvorrichtung (100) oder zum Einstellen der Wasserbehandlungskartusche (1) in der Wasserbehandlungsvorrichtung (100) durch Drehen der Wasserbehandlungskartusche (1) in der Wasserbehandlungsvorrichtung (100) ausgebildet ist, und
ein erstes Element (9A) der Ausricht-Auswerfeinrichtung, wobei das erste Element (9A) der Ausricht-Auswerfeinrichtung zum Positionieren der Wasserbehandlungskartusche (1) in der Wasserbehandlungsvorrichtung (100), wenn die Kartusche (1) in der Vorrichtung (100) angebracht ist, und zum Auswerfen der Wasserbehandlungskartusche (1) aus der Wasserbehandlungsvorrichtung (100) während des Entfernens der Kartusche (1) aus der Vorrichtung (100) durch Drehen der Kartusche (1) um ihre Längsachse ausgebildet ist,
**dadurch gekennzeichnet, dass**
das erste Element (9A) der Ausricht-Auswerfeinrichtung an der Stirnseite des Halses (5) des Körpers auf einem Kreissegment entlang der Kante des Halses (5) angeordnet ist.

2. Wasserbehandlungskartusche (1) nach Anspruch 1, **dadurch gekennzeichnet, dass** der mindestens eine Einlasskanal (7) und der Auslasskanal (8) am Hals (5) des Körpers (2) angeordnet sind.

3. Wasserbehandlungskartusche (1) nach Anspruch 1, **dadurch gekennzeichnet, dass** das erste Element (9A) der Ausricht-Auswerfeinrichtung aus einer Gruppe ausgewählt ist, die einen Vorsprung, eine Nut und eine Aussparung umfasst.

4. Wasserbehandlungskartusche (1) nach Anspruch 1, **dadurch gekennzeichnet, dass** das erste Element (9A) an einem Abschnitt angeordnet ist, der ungefähr 10 % bis ungefähr 80 % des Umfangs des Halses (5), bevorzugt ungefähr 30 % bis ungefähr 70 % des Umfangs des Halses (5), besonders bevorzugt ungefähr 40 % bis ungefähr 70 % des Umfangs des Halses (5) und am meisten bevorzugt ungefähr 65 % des Umfangs des Halses (5) der Wasserbehandlungskartusche (1) ausmacht.

5. Kopf (20) für eine Wasserbehandlungsvorrichtung (100), umfassend:
eine Wasserzufuhröffnung (22) zum Zuführen von Wasser zur Wasserbehandlungsvorrichtung (100),
eine Wasserablassöffnung (24) zum Ablassen von Wasser nach der Behandlung aus der Vorrichtung (100),
ein zweites Element (28) der Anbringungseinrichtung, wobei das Element (28) der Anbringungseinrichtung zum Anbringen der Wasserbehandlungskartusche (1) im Kopf (20) im Wesentlichen unverschiebbar entlang der Längsachse der Wasserbehandlungskartusche (1) und drehbar um die Längsachse der Wasserbehandlungskartusche (1) ausgebildet ist,
ein zweites Element (27) der Positionier-Einstelleinrichtung, wobei das zweite Element (27) der Positionier-Einstelleinrichtung entweder zum Ausrichten der Wasserbehandlungskartusche (1) in der Wasserbehandlungsvorrichtung (100) oder zum Einstellen der Wasserbehandlungskartusche (1) in der Wasserbehandlungsvorrichtung (100) durch Drehen der Wasserbehandlungskartusche (1) in der Wasserbehandlungsvorrichtung (100) ausgebildet ist,
ein zweites Element (26A) der Ausricht-Auswerfeinrichtung, wobei das zweite Element (26A) der Ausricht-Auswerfeinrichtung zum Stabilisieren der Position der Wasserbehandlungskartusche (1) in der Wasserbehandlungsvorrichtung (100), wenn die Kartusche (1) in der Vorrichtung (100) angebracht ist, und zum Auswerfen der Wasserbehandlungskartusche (1) aus der Wasserbehandlungsvorrichtung (100) während des Entfernens der Kartusche (1) aus der Vorrichtung (100) durch Drehen der Kartusche (1) um ihre Längsachse ausgebildet ist, und
einen Sitz (21) des Kopfes (20), umfassend einen Boden und eine Seitenwand,
**dadurch gekennzeichnet, dass**
das zweite Element (26A) der Ausricht-Auswerfeinrichtung am Boden des Sitzes (21) auf einem Kreissegment entlang der Seitenwand des Sitzes (21) des Kopfes (20) angeordnet ist.

6. Kopf (20) nach Anspruch 5, **dadurch gekennzeichnet, dass** das zweite Element (26A) der Ausricht-Auswerfeinrichtung komplementär aus einer Gruppe ausgewählt ist, die einen Vorsprung, eine Nut und eine Aussparung umfasst.

7. Wasserbehandlungsvorrichtung (100), umfassend:
einen Kopf (20), wobei der Kopf (20) Folgendes umfasst:
eine Wasserzufuhröffnung (22) zum Zuführen von Wasser zur Wasserbehandlungsvorrichtung (100) zur Behandlung,
eine Wasserablassöffnung (24) zum Ablassen von Wasser nach der Behandlung aus der Vorrichtung (100) zur Verwendung,
ein zweites Element (28) der Anbringungseinrichtung der Wasserbehandlungsvorrichtung (100),
ein zweites Element (27) der Positionier-Einstelleinrichtung der Wasserbehandlungsvorrichtung (100),
ein zweites Element (26A) der Ausricht-Auswerfeinrichtung der Wasserbehandlungsvorrichtung (100),
einen Sitz (21) des Kopfes (20), umfassend einen Boden und eine Seitenwand (21), und
eine Wasserbehandlungskartusche (1), die im Kopf (20) der Wasserbehandlungsvorrichtung (100) angeordnet ist, wobei die Wasserbehandlungskartusche (1) Folgendes umfasst:
einen Körper (2), umfassend einen zylindrischen Abschnitt (3), wobei der zylindrische Abschnitt (3) an einem Ende durch einen Boden (4) verschlossen ist und sich der zylindrische Abschnitt (3) am anderen Ende zu einem Hals (5) verjüngt, wobei der Hals (5) der Kartusche (1) eine Stirnfläche und eine Kante umfasst,
mindestens einen Einlasskanal (7) zum Zuführen von Wasser zur Behandlung in die Wasserbehandlungskartusche (1),
einen Auslasskanal (8) zum Ablassen von Wasser nach der Behandlung aus der Wasserbehandlungskartusche (1),
mindestens ein Wasserbehandlungsbett, wobei das mindestens eine Wasserbehandlungsbett in Fluidverbindung mit dem Einlasskanal (7) zum Zuführen von Wasser zur Behandlung in das Bett und mit dem Auslasskanal (8) zum Ablassen von Wasser nach der Behandlung im Bett steht,
ein erstes Element (11) der Anbringungseinrichtung zum Anbringen der Wasserbehandlungskartusche (1) in der Wasserbehandlungsvorrichtung (100), wobei, wenn das erste Element (11) und das zweite Element (28) der Anbringungseinrichtung der Wasserbehandlungsvorrichtung (100) in Eingriff stehen, die Wasserbehandlungskartusche (1) im Kopf (20) der Wasserbehandlungsvorrichtung (100) im Wesentlichen unverschiebbar entlang der Längsachse der Wasserbehandlungskartusche (1) relativ zum Kopf (20) und drehbar um die Längsachse der Wasserbehandlungskartusche (1) relativ zum Kopf (20) angeordnet ist, und eine Fluidverbindung zwischen dem Auslasskanal (8) der Kartusche (1) und der Wasserablassöffnung (24) hergestellt wird, um Wasser nach der Behandlung aus der Wasserbehandlungsvorrichtung (100) abzulassen,
ein erstes Element (10) der Positionier-Einstelleinrichtung, wobei, wenn das erste Element (10) und das zweite Element (27) der Positionier-Einstelleinrichtung in Eingriff stehen, eine Konfiguration aus den folgenden erreicht wird:
die Wasserbehandlungskartusche (1) ist im Kopf (20) der Wasserbehandlungsvorrichtung (100) so ausgerichtet, dass eine Fluidverbindung zwischen dem Einlasskanal (7) der Kartusche (1) und der Wasserzufuhröffnung (22) des Kopfes (20) hergestellt wird, um der Wasserbehandlungskartusche (1) Wasser zur Behandlung zuzuführen,
die Wasserbehandlungskartusche (1) ist im Kopf (20) der Wasserbehandlungsvorrichtung (100) so angeordnet, dass eine Fluidverbindung mit mindestens einem Einlasskanal (7) der Kartusche (1) mit der Öffnung (22) des Kopfes (20) hergestellt wird, und ermöglicht es, die Menge an Wasser, die der Kartusche (1) zur Behandlung zugeführt wird, durch den mindestens einen Einlasskanal (7) durch Drehen der Wasserbehandlungskartusche (1) um die Längsachse der Wasserbehandlungskartusche (1) relativ zum Kopf (20) der Vorrichtung (100) einzustellen, und
ein erstes Element (9A) der Ausricht-Auswerfeinrichtung, das an der Wasserbehandlungskartusche (1) angeordnet ist, wobei, wenn das erste Element (9A) und das zweite Element (26A) der Ausricht-Auswerfeinrichtung in Eingriff stehen, die Position der Wasserbehandlungskartusche (1) im Kopf (20) der Wasserbehandlungsvorrichtung (100) stabilisiert wird, wenn die Kartusche (1) im Kopf (20) der Vorrichtung (100) angebracht ist, und das Auswerfen der Wasserbehandlungskartusche (1) aus dem Kopf (20) der Wasserbehandlungsvorrichtung (100) während des Entfernens der Kartusche (1) aus der Vorrichtung (100) durch Drehen der Kartusche (1) um ihre Längsachse relativ zum Kopf (20) der Wasserbehandlungsvorrichtung (100) erfolgt,
**dadurch gekennzeichnet, dass**
das erste Element (9A) der Ausricht-Auswerfeinrichtung an der Stirnseite des Halses (5) des Körpers auf einem Kreissegment entlang der Kante des Halses (5) angeordnet ist, und das zweite Element (26A) der Ausricht-Auswerfeinrichtung komplementär am Boden des Sitzes (21) auf einem Kreissegment entlang der Seitenwand des Sitzes (21) des Kopfes (20) der Wasserbehandlungsvorrichtung (100) angeordnet ist.

8. Wasserbehandlungsvorrichtung (100) nach Anspruch 7, **dadurch gekennzeichnet, dass** der mindestens eine Einlasskanal (7) und der Auslasskanal (8) am Hals (5) der Wasserbehandlungskartusche (1) angeordnet sind, während die Wasserzufuhröffnung (22) im Sitz (21) des Kopfes (20) der Wasserbehandlungsvorrichtung (100) angeordnet ist.

9. Wasserbehandlungsvorrichtung (100) nach Anspruch 7, **dadurch gekennzeichnet, dass** das erste Element (9A) der Ausricht-Auswerfeinrichtung aus einer Gruppe ausgewählt ist, die einen Vorsprung, eine Nut und eine Aussparung umfasst, während das zweite Element (26A, 26B) der Ausricht-Auswerfeinrichtung komplementär aus einer Gruppe ausgewählt ist, die einen Vorsprung, eine Nut und eine Aussparung umfasst.

10. Wasserbehandlungsvorrichtung (100) nach Anspruch 7, **dadurch gekennzeichnet, dass** das erste Element (9A) an einem Abschnitt angeordnet ist, der ungefähr 10 % bis ungefähr 80 % des Umfangs des Halses (5), bevorzugt ungefähr 30 % bis ungefähr 70 % des Umfangs des Halses (5), besonders bevorzugt ungefähr 40 % bis ungefähr 70 % des Umfangs des Halses (5) und am meisten bevorzugt ungefähr 65 % des Umfangs des Halses (5) der Wasserbehandlungskartusche (1) ausmacht.

11. Wasserbehandlungsvorrichtung (100) nach Anspruch 7, **dadurch gekennzeichnet, dass** das zweite Element (26A) der Ausricht-Auswerfeinrichtung des Kopfes (20) eine derartige Länge im Verhältnis zum ersten Element (9A) der Ausricht-Auswerfeinrichtung an der Wasserbehandlungskartusche (1) aufweist, dass es aus dem Kopf (20) beim Drehen der Kartusche (1) um ihre Längsachse in eine beliebige Richtung um ungefähr 5° bis ungefähr 19°, besonders bevorzugt um ungefähr 8° bis ungefähr 16° und ganz besonders bevorzugt um ungefähr 13° ausgeworfen wird.

## Revendications

1. Une cartouche de traitement d'eau (1) pour un dispositif de traitement d'eau (100), la cartouche de traitement d'eau (1) comprenant :
un corps (2) comprenant une partie cylindrique (3), la partie cylindrique (3) étant fermée par un fond (4) à une extrémité et la partie cylindrique (3) se rétrécissant pour former un col (5) à l'autre extrémité, le col (5) de la cartouche (1) comprenant une face et un bord,
au moins un canal d'entrée (7) pour alimenter la cartouche de traitement d'eau (1) en eau à traiter,
un canal de sortie (8) pour évacuer l'eau traitée hors de la cartouche de traitement d'eau (1),
au moins un lit de traitement d'eau, ledit au moins un lit de traitement d'eau étant en communication fluidique avec le canal d'entrée (7) pour alimenter le lit en eau à traiter et avec le canal de sortie (8) pour évacuer l'eau après traitement dans le lit,
un premier élément (11) des moyens de fixation pour fixer la cartouche (1) dans le dispositif de traitement d'eau (100), le premier élément (11) des moyens de fixation étant configuré pour fixer la cartouche (1) dans le dispositif (100) de manière sensiblement immobile le long de l'axe longitudinal de la cartouche de traitement d'eau (1) et de manière rotative autour de l'axe longitudinal de la cartouche de traitement d'eau (1),
un premier élément (10) des moyens de réglage de positionnement, le premier élément (10) des moyens de réglage de positionnement étant configuré pour soit orienter la cartouche de traitement d'eau (1) dans le dispositif de traitement d'eau (100), soit ajuster la cartouche de traitement d'eau (1) dans le dispositif de traitement d'eau (100) en faisant tourner ladite cartouche de traitement d'eau (1) dans le dispositif de traitement d'eau (100), et
un premier élément (9A) des moyens d'orientation et d'éjection, le premier élément (9A) des moyens d'orientation et d'éjection étant configuré pour positionner la cartouche de traitement d'eau (1) dans le dispositif de traitement d'eau (100), lorsque la cartouche (1) est montée dans le dispositif (100), et pour éjecter la cartouche de traitement d'eau (1) du dispositif de traitement d'eau (100) lors du retrait de la cartouche (1) du dispositif (100) en faisant tourner ladite cartouche (1) autour de son axe longitudinal,
**caractérisée en ce que**
ledit premier élément (9A) des moyens d'orientation et d'éjection est disposé sur la face du col (5) du corps sur un segment circulaire le long du bord dudit col (5).

2. Une cartouche de traitement d'eau (1) selon la revendication 1, **caractérisée en ce que** lesdits au moins un canal d'entrée (7) et un canal de sortie (8) sont disposés sur le col (5) du corps (2).

3. Une cartouche de traitement d'eau (1) selon la revendication 1, **caractérisée en ce que** ledit premier élément (9A) des moyens d'orientation et d'éjection est choisi parmi un groupe comprenant une saillie, une rainure et un évidement.

4. Une cartouche de traitement d'eau (1) selon la revendication 1, **caractérisée en ce que** ledit premier élément (9A) est disposé sur une partie représentant environ 10 % à environ 80 % de la circonférence du col (5), de préférence environ 30 % à environ 70 % de la circonférence du col (5), plus préférablement d'environ 40 % à environ 70 % de la circonférence du col (5) et encore plus préférablement d'environ 65 % de la circonférence du col (5) de la cartouche de traitement d'eau (1).

5. Une tête (20) pour un dispositif de traitement d'eau (100), comprenant
un port d'alimentation en eau (22) pour alimenter en eau le dispositif de traitement d'eau (100),
un port d'évacuation d'eau (24) pour évacuer l'eau traitée hors du dispositif (100),
un deuxième élément (28) des moyens de fixation, ledit élément (28) des moyens de fixation étant configuré pour fixer la cartouche de traitement d'eau (1) dans la tête (20) de manière sensiblement immobile le long de l'axe longitudinal de la cartouche de traitement d'eau (1) et de manière rotative autour de l'axe longitudinal de la cartouche de traitement d'eau (1),
un deuxième élément (27) des moyens de réglage de positionnement, le deuxième élément (27) des moyens de réglage de positionnement étant configuré pour soit orienter la cartouche de traitement d'eau (1) dans le dispositif de traitement d'eau (100), soit ajuster la cartouche de traitement d'eau (1) dans le dispositif de traitement d'eau (100) en faisant tourner ladite cartouche de traitement d'eau (1) dans le dispositif de traitement d'eau (100),
un deuxième élément (26A) des moyens d'orientation et d'éjection, le deuxième élément (26A) des moyens d'orientation et d'éjection étant configuré pour stabiliser la position
de la cartouche de traitement d'eau (1) dans le dispositif de traitement d'eau (100), lorsque la cartouche (1) est montée dans le dispositif (100), et pour éjecter la cartouche de traitement d'eau (1) du dispositif de traitement d'eau (100) lors du retrait de la cartouche (1) du dispositif (100) en faisant tourner ladite cartouche (1) autour de son axe longitudinal, et
un siège (21) de la tête (20) comprenant un fond et une paroi latérale,
**caractérisée en ce que**
ledit deuxième élément (26A) du dispositif d'orientation et d'éjection est disposé au fond du siège (21), sur un segment circulaire le long de la paroi latérale dudit siège (21) de la tête (20).

6. Une tête (20) selon la revendication 5, **caractérisée en ce que** ledit deuxième élément (26A) des moyens d'orientation et d'éjection est choisi complémentairement parmi un groupe comprenant une saillie, une rainure et un évidement.

7. Un dispositif de traitement d'eau (100), comprenant
une tête (20), la tête (20) comprenant
un port d'alimentation en eau (22) pour alimenter en eau le dispositif de traitement d'eau (100) pour traitement,
un port d'évacuation d'eau (24) pour évacuer l'eau traitée hors du dispositif (100) pour utilisation,
un deuxième élément (28) des moyens de fixation du dispositif de traitement d'eau (100), un deuxième élément (27) des moyens de réglage de positionnement du dispositif de traitement d'eau (100),
un deuxième élément (26A) des moyens d'orientation et d'éjection du dispositif de traitement d'eau (100),
un siège (21) de la tête (20) comprenant un fond et une paroi latérale (21), et
une cartouche de traitement d'eau (1) disposée dans la tête (20) du dispositif de traitement d'eau (100), la cartouche de traitement d'eau (1) comprenant
un corps (2) comprenant une partie cylindrique (3), la partie cylindrique (3) étant fermée par un fond (4) à une extrémité et la partie cylindrique (3) se rétrécissant pour former
un col (5) à l'autre extrémité, le col (5) de la cartouche (1) comprenant une face et un bord,
au moins un canal d'entrée (7) pour alimenter la cartouche de traitement d'eau (1) en eau à traiter,
un canal de sortie (8) pour évacuer l'eau traitée hors de la cartouche de traitement d'eau (1),
au moins un lit de traitement d'eau, ledit au moins un lit de traitement d'eau étant en communication fluidique avec le canal d'entrée (7) pour alimenter le lit en eau à traiter et avec le canal de sortie (8) pour évacuer l'eau après traitement dans le lit,
un premier élément (11) des moyens de fixation pour fixer la cartouche de traitement d'eau (1) dans le dispositif de traitement d'eau (100), dans lequel, lorsque le premier élément (11) et le deuxième élément (28) des moyens de fixation du dispositif de traitement d'eau (100) sont en prise, la cartouche de traitement d'eau (1) est disposée dans la tête (20) du dispositif de traitement d'eau (100) de manière sensiblement immobile le long de l'axe longitudinal de la cartouche de traitement d'eau (1) par rapport à la tête (20) et de manière rotative autour de l'axe longitudinal de la cartouche de traitement d'eau (1) par rapport à la tête (20), et une communication fluidique est établie entre le canal de sortie (8) de la cartouche (1) et le port d'évacuation d'eau (24) afin d'évacuer l'eau traitée hors du dispositif de traitement d'eau (100),
un premier élément (10) des moyens de réglage de positionnement, dans lequel, lorsque le premier élément (10) et le deuxième élément (27) des moyens de réglage de positionnement sont en prise, une configuration parmi les suivantes est obtenue :
la cartouche de traitement d'eau (1) est orientée dans la tête (20) du dispositif de traitement d'eau (100) de telle sorte qu'une communication fluidique soit établie entre le canal d'entrée (7) de la cartouche (1) et le port d'alimentation en eau (22) de la tête (20) afin d'alimenter la cartouche de traitement d'eau (1) en eau à traiter,
la cartouche de traitement d'eau (1) est disposée dans la tête (20) du dispositif de traitement d'eau (100) de telle sorte qu'une communication fluidique soit établie entre au moins un canal d'entrée (7) de la cartouche (1) avec le port (22) de la tête (20), et permet de régler le débit d'eau acheminé vers la cartouche (1) pour y être traité, par l'intermédiaire dudit au moins un canal d'entrée (7), en faisant tourner ladite cartouche de traitement d'eau (1) autour de l'axe longitudinal de la cartouche de traitement d'eau (1) par rapport à la tête (20) du dispositif (100), et
un premier élément (9A) des moyens d'orientation et d'éjection, disposé sur la cartouche de traitement d'eau (1), dans lequel, lorsque le premier élément (9A) et le deuxième élément (26A) des moyens d'orientation et d'éjection sont en prise, la position de la cartouche de traitement d'eau (1) dans la tête (20) du dispositif de traitement d'eau (100) est stabilisée, lorsque la cartouche (1) est montée dans la tête (20) du dispositif (100), et il est prévu une éjection de la cartouche de traitement d'eau (1) hors de la tête (20) du dispositif de traitement d'eau (100) lors du retrait de la cartouche (1) du dispositif (100), en faisant tourner ladite cartouche (1) autour de son axe longitudinal par rapport à la tête (20) du dispositif de traitement d'eau (100),
**caractérisé en ce que**
ledit premier élément (9A) des moyens d'orientation et d'éjection est disposé sur la face du col (5) du corps, sur un segment circulaire le long du bord dudit col (5), et ledit deuxième élément (26A) des moyens d'orientation et d'éjection est disposé de manière complémentaire au fond du siège (21), sur un segment circulaire le long de la paroi latérale dudit siège (21) de la tête (20) du dispositif de traitement d'eau (100).

8. Un dispositif de traitement d'eau (100) selon la revendication 7, **caractérisé en ce que** ledit au moins un canal d'entrée (7) et le canal de sortie (8) sont disposés sur le col (5) de la cartouche de traitement d'eau (1), tandis que ledit port d'alimentation en eau (22) est disposé dans le siège (21) de la tête (20) du dispositif de traitement d'eau (100).

9. Un dispositif de traitement d'eau (100) selon la revendication 7, **caractérisé en ce que** ledit premier élément (9A) des moyens d'orientation et d'éjection est choisi parmi un groupe comprenant une saillie, une rainure et un évidement, tandis que ledit deuxième élément (26A, 26B) des moyens d'orientation et d'éjection est choisi de manière complémentaire parmi un groupe comprenant une saillie, une rainure et un évidement.

10. Un dispositif de traitement d'eau (100) selon la revendication 7, **caractérisé en ce que** ledit premier élément (9A) est disposé sur une partie représentant environ 10 % à environ 80 % de la circonférence du col (5), de préférence environ 30 % à environ 70 % de la circonférence du col (5), plus préférablement d'environ 40 % à environ 70 % de la circonférence du col (5) et encore plus préférablement d'environ 65 % de la circonférence du col (5) de la cartouche de traitement d'eau (1).

11. Un dispositif de traitement d'eau (100) selon la revendication 7, **caractérisé en ce que** ledit deuxième élément (26A) des moyens d'orientation et d'éjection de la tête (20) a une telle longueur par rapport audit premier élément (9A) des moyens d'orientation et d'éjection de la cartouche de traitement d'eau (1) qu'il est éjecté de ladite tête (20) lors de la rotation de ladite cartouche (1) autour de son axe longitudinal dans n'importe quelle direction d'environ 5° à environ 19°, plus préférablement d'environ 8° à environ 16°, et encore plus préférablement d'environ 13°.
